# EUROPEAN PATENT SPECIFICATION

(11) **EP 2 195 583 B1**
(45) Date of publication and mention of the grant of the patent: **13.03.2013**
(21) Application number: 07872999.3
(22) Date of filing: 28.09.2007
(51) Int. Cl.: F24J 2/07

(54) **RESIDENTIAL SOLAR THERMAL POWER PLANT**
SONNENWÄRMEKRAFTANLAGE FÜR WOHNHÄUSER
CENTRALE SOLAIRE THERMODYNAMIQUE RÉSIDENTIELLE

(30) Priority: 04.10.2006 US 543659
(43) Date of publication of application: 16.06.2010
(73) Proprietor: Lawrence Livermore National Security, LLC, Livermore, CA 94550-9234 (US)
(72) Inventor: BENNETT, Charles, Livermore CA 94550 (US)
(74) Representative: Richards, John
(86) International application number: PCT/US2007/020902
(87) International publication number: WO 2009/041947

(56) References cited:
- DE-A1- 2 556 725
- DE-A1- 2 716 108
- JP-A- 55 160 258
- US-A- 1 855 815
- US-A- 4 011 858
- US-A- 4 156 420
- US-A- 4 206 747
- US-A- 4 505 258
- US-A- 5 245 985
- US-A1- 2004 163 640
- US-A1- 2005 126 560

## Description

### I. CROSS-REFERENCE TO RELATED APPLICATIONS

This application is a continuation-in-part of prior Application No. 10/835,665, filed April 30, 2004, by Charles L. Bennett.

### II. STATEMENT OF FEDERALLY SPONSORED DEVELOPMENT

The United States Government has rights in this invention pursuant to Contract No. W-7405-ENG-48 between the United States Department of Energy and the University of California for the operation of Lawrence Livermore National Laboratory.

### III. FIELD OF THE INVENTION

This invention relates to solar-thermal energy systems. In particular, the invention relates to a highly efficient residential solar thermal energy collection, storage, and utilization system having a parabolic trough-type solar concentrator rotatably mountable on a preferably fixed structure, such as a residential rooftop, and a tubular heat collector coaxially positioned to receive concentrated sunlight from the concentrator, with the concentrator and collector shaped and oriented to maximize solar collection efficiency and thermal energy delivery to a heat-powered engine for optimizing mechanical and electrical power generation.

### IV. BACKGROUND OF THE INVENTION

Despite over a century of attempts to make solar power commercially viable, solar energy currently makes up an insignificant proportion of per capita energy supply. This has been due primarily to performance and cost inefficiencies of existing solar energy collectors, concentrators, and interfaces to heat storage media which have prevented widespread adoption and use for commercial and residential applications. For example, the SEGS, Solar Electric Generating System, plants in Southern California represent the state of the art today in deployed CSP, Concentrating Solar Power. Based on the experience with the existing SEGS plants, the cost of electricity from newly constructed plants using currently available technology is approximately 10¢/kWh. This cost is much greater than the cost to generate electricity by burning coal, which is approximately 3¢/kWh.

Various solar energy collectors and concentrators, and interfaces to heat storage media and heat engines are known for use in solar thermal electric energy systems, such as the SEGS plants. A few examples include: U.S. Pat. No. 4,586,334 to Nilsson, and U.S. Pat. No. 6,487,859 to Mehos. The Nilsson patent discloses "... a solar energy power generation system which includes means for collecting and concentrating solar energy; heat storage means; Stirling engine means for producing power", and "... the means for collecting and concentrating solar energy is a reflective dish; and the heat transfer means includes first and second heat pipes; the heat storage means is preferably a phase change medium ..." The Mehos patent discloses: "... sodium heat pipe receivers for dish/Stirling systems", and cites references demonstrating: "...sodium vapor temperatures up to 790° C." Additionally, U.S. Pat. No. 4,125,122 discloses a heat pipe receiving energy from a solar concentrator, U.S. Pat. No. 6700054B2 describes connecting to a Stirling engine, among other things, and U.S. Pat. No. 4088120 describes a parabolic trough with a heat pipe at the focus connected to a heat storage medium. U.S. Pat. No. 787,145 describes an elliptical dish mirror that is oriented to track the sun, with a boiler to produce steam at the focus of the mirror. U.S. Pat. No. 3,982,526 describes a device for turning a solar collector about a polar axis, and U.S. Pat. No. 6,886,339B2 describes a parabolic trough solar concentrator with a sun tracking system. U.S. Pat. No. 4,205,657 describes a parabolic trough solar concentrator with a steam generation system. U.S. Pat. No. 4,108,154 describes a parabolic trough solar collector with a windshield.

One particular limitation of currently available solar collectors/concentrators, however, is their relatively low thermal gathering efficiency, which is the ratio of the thermal heat delivered by the heat collecting element relative to the solar heat incident on the concentrating mirror surface area. Based on recent field measurements, the best available collector's, (such as the UVAC heat collector from Solel or the PTR 70 heat collector from Schott, using an oil based heat transfer fluid heated to 400°C), achieve a maximum value of only 50% thermal gathering efficiency at a solar incidence of 800 W/m². At either higher or lower solar irradiance levels, the thermal efficiency is even lower. This efficiency is low primarily because the solar concentration factor for these collectors is relatively low. For example, in the current generation of SEGS plants, the diameter of the absorbing surface in the heat-collecting element is 7 cm, while the width of the parabolic trough aperture is 5.77 m, and the ratio of the concentrator aperture area to collector absorber area, the solar concentration factor, is only 26. Another limitation associated with the relatively low concentration factors of parabolic trough collectors is that the axial length of the collector relative to the concentrator aperture width is quite large. In the DISS case, for example, the length to width ratio is 46.

Another efficiency loss factor that is characteristic of the current state of the art parabolic trough collectors is associated with their horizontal deployment. Averaging over the range of solar incidence angles both through the day and through the year, leads to an average geometrical foreshortening factor of 87%.

Since the efficiency of conversion from solar irradiance to power is known to have a great impact on the cost of electricity, it would be advantageous to provide a highly efficient solar thermal power system for the economical utilization of solar thermal energy in the context of a residential/commercial unit which overcomes the limitations of current solar energy technology for reducing energy costs. And in particular an apparatus and method capable of increasing the solar concentration factor for parabolic trough collectors to beyond about 160 and improving the average geometrical foreshortening factor to greater than about 90%, would be particularly beneficial to substantially raise the thermal gathering efficiency of such solar thermal power plants.

DE 2556725 discloses solar power collecting tanks with cylindrical reflectors and absorber pipes for a heat transport means, whose axes are arranged along the caustic curve of the reflectors.

JP 55 160258 discloses a solar heat water warming device wherein, to increase the efficiency of heat collection from solar light, plural slender heat-collecting tubes are provided in a curved-surfaced heat-collecting panel. An aluminum foil 2 is laid on inside wall of a U-shape curved surface heat-collecting panel 1, plural heat-collecting tubes 3a, 3b and 3c having oval section are placed in the light-collecting position in parallel with longitudinal direction of the heat-collecting panel 1 and fixed with fins 4a, 4b and 4c, and the tubes are provided with coating of graphite paint 5 having high heat-absorbing efficiency. An opening of the heat-collecting panel 1 is covered with a transparent glass panel 9. The heat-collecting panel 1 is made rotatable pivotably around the axis in the longitudinal direction, and a supporting table is made adjustable in inclination angle on vertical surface including axis in the longitudinal direction.

US 4,011,858 discloses an apparatus for collecting solar energy, the apparatus including a parabola shaped reflector around a pipe enclosed in a glass tube, the pipe being located at the focal point of the parabola shaped reflector, so that sunlight rays are reflected thereagainst, so to concentrate their heat thereagainst, the pipe extending outwardly of opposite ends of the reflector, so that water passing through the pipe is thus heated for practical uses, and the reflector being rotatable, so to follow the path of the sun, in order to obtain maximum efficiency therefrom.

DE 2716108 discloses a device for collecting solar energy using a parabolic trough mirror.

The present invention includes a solar thermal power plant comprising: a parabolic trough mirror having a longitudinal focal axis for concentrating sunlight therealong; means for mounting said mirror so that the focal axis is parallel with the earth's rotational axis and said mirror is rotatable about a longitudinal rotation axis thereof; means for rotating said mirror about a longitudinal rotation axis to follow the sun; and a tubular heat collector comprising an optically transparent thick-walled heating tube having an inner wall surface forming a flow channel and a convex curvilinear outer wall surface for magnifying the dimensions of the flow channel, said flow channel having an oblong cross-sectional shape characterized by major and minor axes with a largest diameter of the channel along the major axis and a smallest diameter of the channel along the minor axis and with the major axis aligned with a longitudinal plane of symmetry of the parabolic trough mirror, said inner wall surface coated with a sunlight absorbing material, and said heating tube coaxially positioned along the focal axis to receive concentrated sunlight from said mirror so that a working fluid in the flow channel is heated thereby and provided for use through an outlet end of the heating tube.

Generally, the residential solar thermal power plant of the present invention is largely based on the solar thermal power plant used in the solar thermal aircraft described herein. As such, the residential solar thermal power plant of the present invention has several main components, including a solar concentrating mirror capable of focusing/concentrating sunlight and rotating about a rotation axis, a heat collector/heating tube positioned to absorb the concentrated sunlight, a thermal energy storage reservoir connected to an outlet end of the heat collector, and a heat-powered engine operably connected to the thermal energy storage reservoir, all of which are similar in construction and operation to those previously described for the solar thermal aircraft. The residential solar thermal power plant, however, includes additional efficiency-improving features which are enabled in part by being mountable on a preferably fixed structure, such as the roof of a building, and which together operate to improve the overall efficiency of the power plant.

For example, the heating tube of the heat collector has an oblong cross-sectional profile which increases the solar concentration factor, i.e. the ratio of the aperture area of the concentrator mirror to the sunlight absorbing area of the heating tube. An optically transparent thick-walled heating tube is used so that the outer surface of the heating tube operates to magnify the dimensions of the flow channel formed by an inner surface, to increase the solar concentration factor further still. Furthermore, the concentrator mirror and the heat collector are capable of being mounted so that the focal axis of the mirror and the heat collector are aligned parallel with the earth's rotational axis. This minimizes the foreshortening effect of solar incidence for different times of the year to improve solar concentration. Since increased efficiency, with negligible impact on system capital cost, directly increases the power generation rate to lower the cost of the electric power, these efficiency improving features of the residential solar thermal power plant of the present invention independently as well as in combination provide energy/power generation at reduced cost.

Table 1 lists several efficiency factors which are well known (based on the experience with commercially running power plants, such as the SEGS plants in Southern California) to contribute to the overall efficiency of parabolic trough systems. Additionally, Table 1 shows how these efficiency factors are improved by the present invention.

**Table 1**

| **Component** | **Parabolic Troughs from S&L 2004** | **Present Invention** | **Remarks** |
|---|---|---|---|
| Heat Collector Efficiency | 0.862 | 0.944 | Oblong shape and size of heating tube greatly lowers radiation losses |
| Incidence Angle | .873 | .959 | Polar orientation reduces forme-shortening |
| Optical Efficiency | 0.704 | 0.774 | Polar orientation essentially eliminates end losses. Single unit has no "row to row" shadowing |
| Piping Thermal Losses | 0.965 | 1 | Direct connection to thermal storage virtually eliminates piping loss |
| Thermal to Power Plant Efficiency | 0.934 | 1 | Loss not significant for storage in very close contact with heat engine |
| Parasitics | 0.883 | 0.998 | Only moving part (outside engine) is the trough itself |
| | 0.422 | 0.699 | Product of above Six Factors |

The numerical values in Table 1 for conventional parabolic troughs are taken from the Sargent Lundy report for 2004 parabolic trough technology. The net efficiency advantage i.e. the product of all the individual efficiency factors, is shown in the last row in the table.

Since there is little in the current configuration that incurs additional cost relative to those well known in the SEGS plants, it is possible to estimate the cost of electricity by scaling the conventional SEGS cost by the inverse of the relative efficiency factor from Table 1. Assuming no significant increase in capital costs, the Levelized Electricity Cost (LEC) is estimated to be cut from 10¢/kWh to 6¢/kWh. In the residential application, the economic value of the heating derived from the cooling water feed to the steam engine can be estimated based on the quantity of avoided heating fuel. This economic value is approximately 2¢ per kWh of heating energy. The heating energy derived from cooling the engine is approximately double the power produced by the engine. Reducing the LEC cost by the economic benefit derived from water and space heating leads to a cost for the electric power that is less than 4¢/kWh. Since this cost is much less than the retail price of electric power, approximately 10¢/kWh for a typical customer in Northern California, this shows that residential solar thermal power based on the configuration of the present invention is indeed economically competitive.

### VI. BRIEF DESCRIPTION OF THE DRAWINGS

The accompanying drawings, which are incorporated into and form a part of the disclosure, are as follows:

Figure 1 is a perspective view of an example of the solar thermal aircraft

Figure 2 is a side cross-sectional view of the solar thermal aircraft taken along the line 2-2 of Figure 1.

Figure 3 is a cross-sectional view of the solar thermal aircraft fuselage taken along the line 3-3 of Figure 2.

Figure 3a is an enlarged cross-sectional view of the heat collection element and back-reflector enclosed in circle 3a of Figure 3.

Figure 4 is an enlarged cross-sectional view of the heat collection element enclosed in the circle 4 of Figure 3a.

Figure 5 is a perspective view of the heat storage vessel coupled to a heat engine.

Figure 6 is a cross-sectional view of the heat storage vessel taken along the line 6-6 of Figure 5.

Figure 7 is a cross-sectional view of the heat storage vessel and the heat engine taken along the line 7-7 of Figure 5.

Figure 8 is an enlarged cross-sectional view of the crankshaft pumping structure enclosed in the circle 8 of Figure 7.

Figure 9 is an enlarged cross-sectional view of the lithium hydride containment shell structure.

Figure 10 is an enlarged cross-sectional view of the multi-layer insulation structure.

Figure 11 is a heliostat circuit diagram for sun-tracking mode.

Figure 12 is a heliostat circuit diagram for sun-searching mode.

Figure 13 is a heliostat mode switching circuit diagram.

Figure 14 is a perspective view of a twin engine/twin collector solar thermal aircraft.

Figure 15 is a perspective view of single engine/twin pusher propeller solar thermal aircraft.

Figure 16 is a cross-sectional view of a Stirling engine.

Figure 17 is a graph of hydrogen vapor pressure in equilibrium with LiH-Li mixture.

Figure 18 is a side cross-sectional view of a ducted fan of the solar thermal powered aircraft.

Figure 19 is a cross sectional view through an alternative heat pipe comprising a 6 channel structure.

Figure 20 is a cross-sectional view of an alternative heat storage vessel and heat engine including a hermetically sealed reservoir of working fluid.

Figure 21 is a perspective view of an example of the residential solar thermal power plant , mounted at a northern hemisphere location.

Figure 22 is an axial cross-sectional view of an example of the concentrator mirror and heat collector shown protected by a windshield.

Figure 23 is a cross-sectional view of the example shown in Figure 21 taken along the line 23-23 showing representative sunrays at the summer solstice.

Figure 24 is a cross-sectional view similar to Figure 23 of the embodiment shown in Figure 21 and showing representative sunrays at the winter solstice.

Figure 25 is an enlarged cross-sectional view of the examplary heat collector enclosed in circle 25 in Figure 22.

Figure 26 is an enlarged cross-sectional view of a second of the heat collector of the present invention having a thin-walled heating tube with oblong cross-sectional profile surrounded by an evacuated optically transparent tubular envelope.

Figure 27 is an enlarged cross-sectional view of an exemplary embodiment of the heat collector of the present invention which is an optically transparent thick-walled heating tube.

Figure 28 is an enlarged cross-sectional view of a second exemplary embodiment of the heat collector of the present invention having an optically transparent thick-walled heating tube similar to Figure 27 surrounded by an evacuated optically transparent tubular envelope.

Figure 29 is a schematic diagram illustrating an exemplary steam generation

Figure 30 is a perspective geometric view of the parabolic trough mirror of the present invention.

Figure 31 is an enlarged cross-sectional view of an example of the heat collector having four sides and four opposing vertices.

### V. DETAILED DESCRIPTION

### A. Solar Thermal Aircraft

Reference numerals used in the following description for the solar thermal aircraft are listed in Table 2.

**Table 2**

| | | | |
|---|---|---|---|
| 100 | Solar thermal powered aircraft | 132 | MLI (Multi-layer insulation) layers of highly reflective material |
| 102 | Wing | 133 | LiH containment shell structure |
| 103 | Fuselage | 134 | Hydrogen& other dissociation products of LiH |
| 104 | Rudder | 135 | Spacers between MLI layers |
| 105 | Elevator | 136 | Lithium hydride and lithium |
| 106 | Aileron | 137 | Lithium impervious alloy |
| 107 | Transmission | 139 | Gold layer |
| 108 | Cooling air inlet channel | 140 | Heat engine |
| 109 | Propeller | 141 | Cooling fins |
| 110 | Concentrator mirror | 142 | Hot side heat exchanger |
| 111 | Ruddervator | 143 | Regenerator heat exchanger |
| 112 | Transparent fuselage skin | 144 | Cold side heat exchanger |
| 113 | Back-reflector | 145 | Crankshaft pump |
| 114 | Solar concentrator support | 146 | Filter |
| 115 | Solar concentrator drive motor | 147 | Crank mechanism |
| 116 | Heliostat | 148 | Crankshaft |
| 117 | Heliostat Photovoltaic A | 149 | Crankcase pressure relief valve |
| 118 | Heliostat Photovoltaic B | 150 | Ducted fan |
| 119 | Heliostat Photovoltaic C | 151 | Expansion space |
| 120 | Heat collector | 152 | Displacer piston |
| 121 | Antireflection coating | 153 | Compression space |
| 122 | Heat collector envelope | 154 | Power piston |
| 123 | Evacuated space | 155 | Crankcase space |
| 124 | Heat collector coating | 156 | Displacer piston gap |
| 125 | Stainless steel shell | 157 | Power piston gap |
| 126 | Vapor phase sodium | 158 | Bend region of heat pipe |
| 127 | Liquid phase sodium | 160 | Working fluid pressure vessel |
| 128 | Sodium condenser | 161 | Working fluid reservoir |
| 129 | Heat pipe | 162 | Gas tight journal bearing |
| 130 | Thermal battery | 163 | Hydrogen permeable cap |
| 131 | Highly reflective vacuum shell | 164 | Operational amplifier |

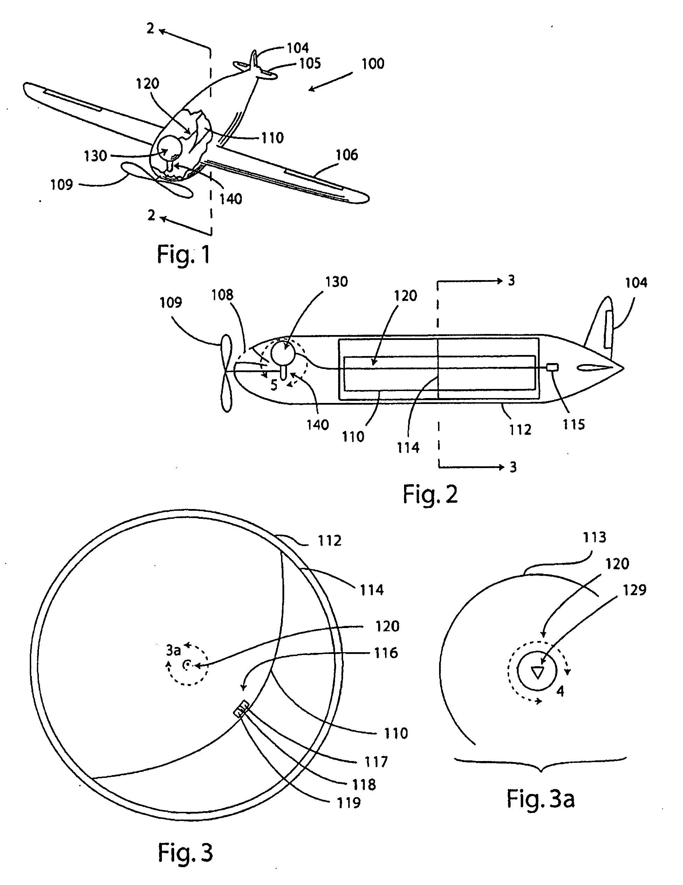

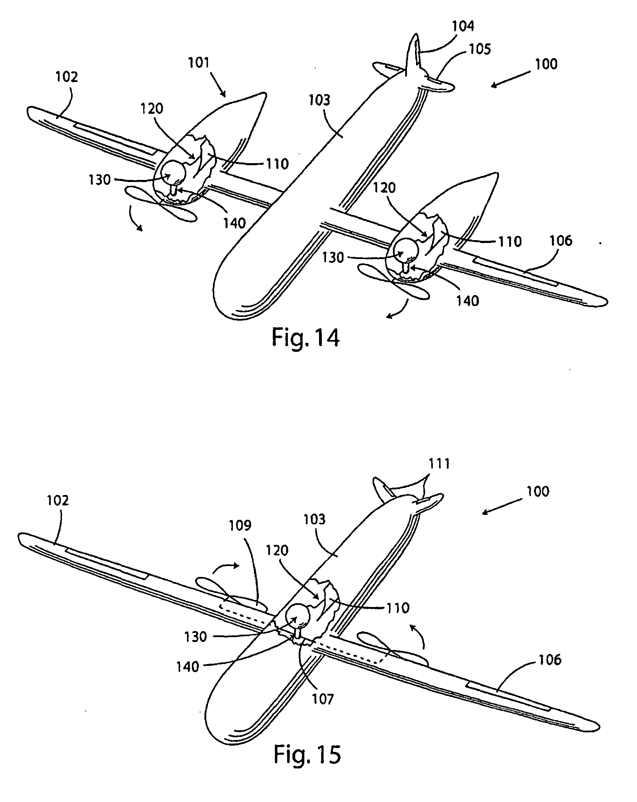

Turning now to the drawings, Figures 1 and 2 show an example of the aircraft generally indicated at reference character **100.** The aircraft **100** is shown having a conventional fixed- wing airplane body configuration comprising a fuselage **103,** and wings **102** and horizontal and vertical stabilizing fins extending from the fuselage. As used herein and in the claims, the term "aircraft body" generally includes the fuselage, the wings, and the horizontal and vertical stabilizing fins, among other structural components connected to and extending from the fuselage. Additionally, attitude control is provided by rudder **104,** elevators **105** (or a ruddervator **111** shown in Figure 15) and ailerons **106.** And a propulsion device, such as a propeller **109** in Figure 1, is coupled to an engine, such as heat engine **140** to propel the aircraft, and thereby produce lift and sustain free flight of the aircraft. Exemplary alternative examples of the aircraft body are shown in Figures 14, 15 and 17 discussed in greater detail below.

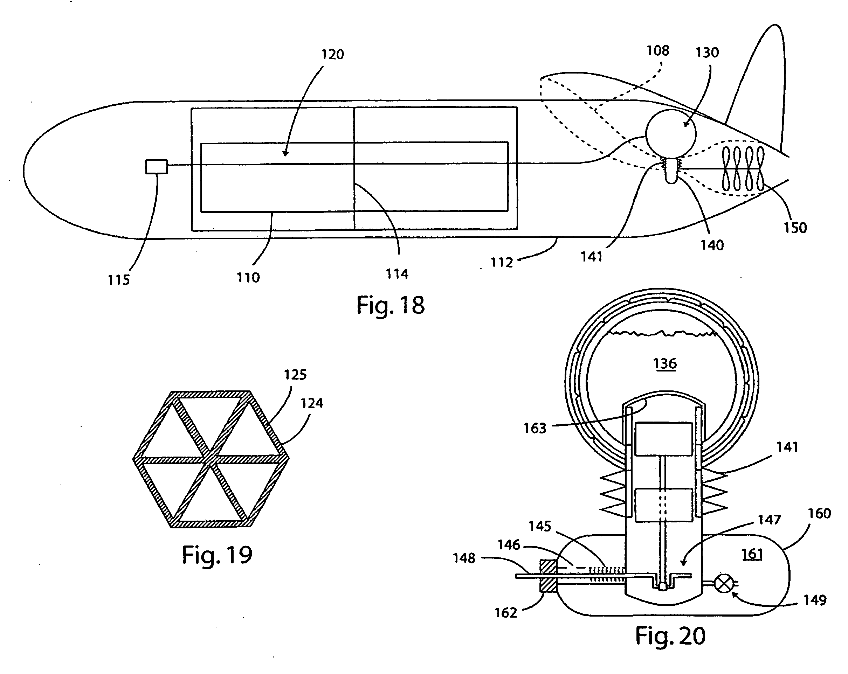

Figures 1 and 2 also show the solar thermal power plant of the aircraft **100** generally positioned in the interior of the aircraft body, namely the fuselage **103.** The solar thermal power plant includes a heat engine **140,** heat storage means i.e. a thermal battery **130** including a heat storage container and medium, a solar tracking concentrator **110,** and a heat collection/transport conduit, device, or other means **120.** The heat engine **140** is shown mounted in the fuselage **103** at a forward end, with the thermal battery **130** (and in particular the heat storage medium) in thermal contact with a hot side of the heat engine. Due to its internal location, a cooling air inlet channel **108** may be provided to direct ambient air backwash from the propeller **109** to a cold side of the heat engine for cooling. An alternative example shown in Figure 18 comprises a rear mount of a heat engine **140,** with ambient air sucked past cooling fins **141** by a rearward mounted ducted fan **150.** The solar tracking concentrator **110** is movably mounted for actuation in an optically transparent section **112** of the aircraft body, shown in Figure 2 as a section of the fuselage **103.** The optically transparent section **112** has a fuselage skin which is made of an optically transparent, ultraviolet resistant, lightweight material, such as TEDLAR from DuPont, that allows most of the incident solar energy to be transmitted therethrough and to the solar concentrator **110.**

### Solar Tracking Concentrator

Figures 2 and 3 show the solar concentrator, i.e. the concentrator mirror **110,** in the preferred form of a parabolic trough-shaped reflector, which is movably mounted to a support structure **114** connected to the fuselage. In particular, the concentrator mirror is mounted so as to freely rotate about a rotational axis, which is preferably a focal axis of the parabolic trough reflector. Furthermore, the rotational axis may also be located to be coaxial with the central axis of the fuselage. In any case, the concentrator mirror may be made of a lightweight, thin plastic film, for example, stretched over a skeleton array of formers and coated with a thin layer of highly reflective metal, such as gold or silver. And the solar concentrator support structure **114** is preferably a space frame that allows most of the incident solar flux to be transmitted to the concentrator mirror **110.** The entire solar concentrator assembly is balanced, so that no torque is required to hold a particular orientation.

Rotational control of the solar concentrator is provided by a solar tracking device or means including a device or means for determining whether the solar concentrator is optimally aligned with the sun, and a device or means for actuating, e.g. rotating, the solar concentrator mirror into optimal alignment with the sun based on the optimal alignment determination. As used herein and in the claims, "optimal alignment" is that alignment and angle producing the highest concentration of solar flux, i.e. a position "directly facing" the sun. The actuation device or means may comprise, for example, a drive motor 115 (Figure 2) mounted on the rotational axis of the solar concentrator assembly. And the device or means utilized for determining optimal alignment may be a heliostat 116 adapted to determine the alignment of the sun with respect to the focal axis of the concentrator mirror 110 and operably connected to the drive motor 115 to control the rotational actuation of the solar concentrator. In particular, the heliostat is adapted to detect a shadow of a heat collection and transport element (heat pipe) along the focal axis for use in the optimal alignment determination. The heliostat 116 is shown in Figure 3 mounted on the concentrator mirror, and in particular, along a symmetric plane of the reflective parabolic trough. The heliostat 116 includes sensing elements which are preferably solar cells (e.g. 117-119) and which are preferably symmetrically arranged about the symmetric plane of the concentrator mirror 110. In a preferred example, the solar cells include a center cell 118, and two outer cells 117, and 119 on opposite sides of the center cell.

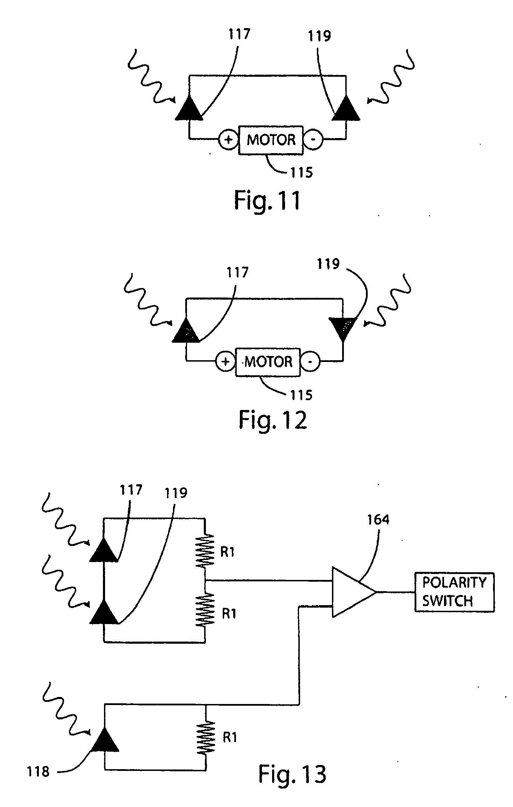

A preferred method of heliostat operation uses the one center and two outer solar cells in a closed loop feedback stabilization system involving two modes of operation: a sun-searching mode, and a sun-tracking mode, shown in Figures 11-13. First, in the sun-tracking mode, the sun is already aligned with the symmetric plane of the reflective parabolic trough, and deviations from alignment are detected. When the solar concentrator is properly, i.e. optimally, aligned to the sun, both outer cells 117,119 of the heliostat 116 are equally illuminated, while the central cell 118 is in the shadow of the back-reflector 113 of the heat collector 120 (or the shadow of the heat collector itself if a back-reflector is not used). As the alignment deviates slightly from the optimal, one of the outer solar cells 117,119 in the heliostat 116 gets a greater solar exposure, while the opposing cell exposure decreases. These sensors feed into a control mechanism (not shown) known in the art, operably connected to the actuating mechanism, e.g. motor 115, for adjustably rotating the solar concentrator 110 on the support structure 114 to maintain optimal alignment of the concentrator mirror to the projected direction to the sun. An example of such a system is shown in Figure 11. In this figure, the voltage sent to the DC electric motor 115 is the difference of the voltages across the photodiodes 117 and 119, and is proportional to the deviation from the aligned position, and has a nearly linear restoring torque for a certain range of deviations.

In the sun-searching mode, photo-diodes associated with the two outer cells 117 and 119 are connected electrically as shown in Figure 12. As long as some solar illumination is present, the DC motor 115 produces a driving torque on the solar concentrator structure. Under the condition that no shadow falls on any of the photo-diodes, and they are all equally illuminated, the average voltage of the end photo-diodes (which are driving the motor) is less than the voltage across the central diode. In this case, the output of operational amplifier 164 is low, and the polarity switch is in sun-searching mode. The transition from sun searching mode to sun tracking mode occurs as the shadow of the axial heat collector back-reflector falls onto center photo-diode 118. As the central photo-diode becomes sufficiently shaded, its voltage drops below the average voltage of the outer two photo-diodes **117** and **119.** A circuit that exploits this drop in the central diode voltage to change the relative polarity of the diode **117** and **119** connections to the motor **115,** is displayed in Figure 13. As the central diode **118** becomes sufficiently shaded, its voltage drops, and the output of the operational amplifier goes high, thus triggering the sun-tracking mode. Friction of the mechanical structure serves to damp oscillations about the properly aligned orientation.

It is appreciated that sun-searching mode is required at sunrise once per day, and also each time the aircraft heading becomes very close to the projected direction to the sun, and the heliostat is not sufficiently illuminated to maintain sun-tracking. Additionally, the solar cell sensors are adapted to provide power to directly drive the axial rotation actuator, i.e. DC motor 115, and no external power source is required. In this manner, the mass and complexity required for the heliostat system are greatly reduced.

### Heat Collection and Transport Element (Heat Pipe)

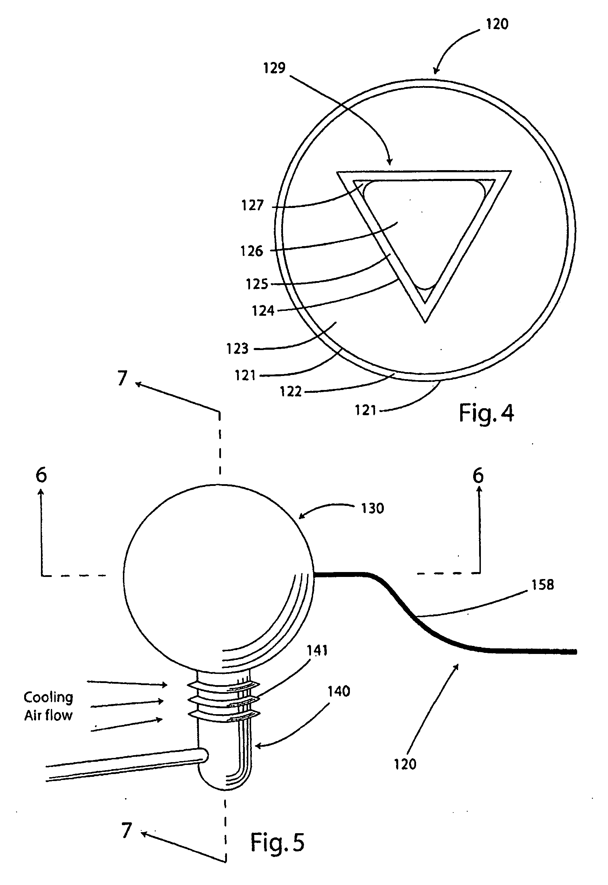

Once the parabolic trough reflector **110** is aligned to the sun, solar radiance is focused onto the center of a heat collector **120** shown best in Figures 2 and 3 as being located along the focal axis of the parabolic trough reflector **110** (shown also as the central axis of the fuselage **103).** As shown in Figures 3a and 4, the heat collector **120** includes a central heat pipe **129** and a heat collector envelope **122,** which is a transparent vacuum vessel that allows focused sunlight to transmit to the central heat pipe **129.** In a preferred, the envelope material is fused silica, by virtue of its high transparency, high strength, and tolerance to high temperature. The transparent heat collector envelope **122** is constructed to support a sufficiently high vacuum in the evacuated space **123** to prevent significant conductive or convective heat loss from the central heat pipe **129.** The heat collector envelope **122** may have an antireflection coating **121** that decreases the transmission loss of sunlight to the central heat pipe, and minimizes radiative heating of the envelope by the hot central heat pipe. As shown in Figure 4, both an inner surface and an outer surface of the heat collector envelope **122** are coated with the antireflection coating **121.**

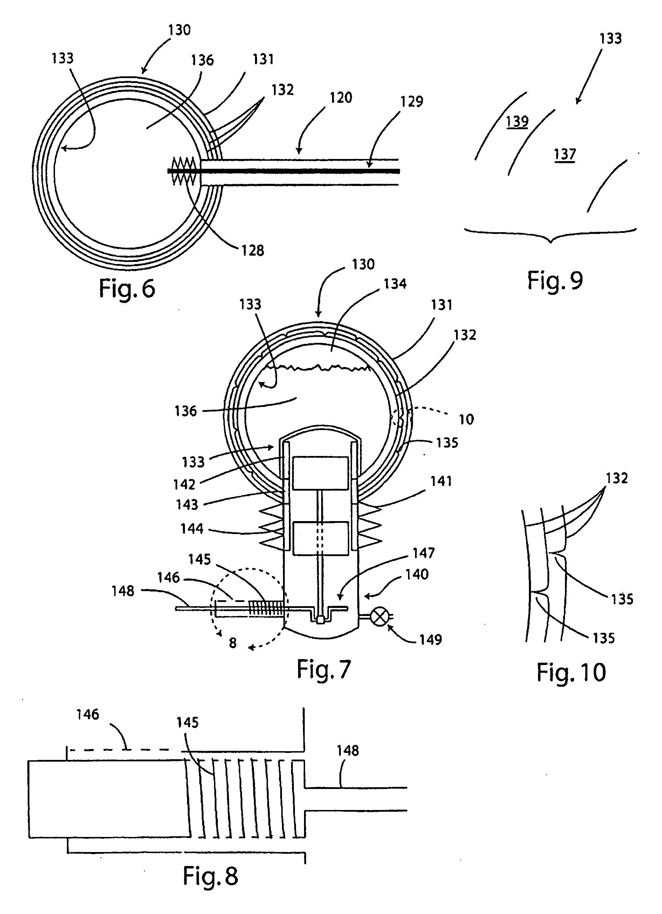

As shown in Figure 4, the heat pipe **129** preferably has a triangular micro-heat pipe structure **129** with a single triangular channel, which configuration is especially suited for small aircraft applications. For larger aircraft applications, however, heat pipes having a network of multiple capillary channels in parallel are preferred. An example of the multiple capillary channel configuration is shown in Figure 19, illustrating a close packed assembly of six parallel channels each having a triangular cross-section. The heat pipe 129 contains a heat transfer working fluid that operates to collect solar energy and transport heat to the heat storage medium and/or heat engine (see Figures 5 and 6). The heat transfer working fluid is preferably sodium, in both liquid phase 127, shown as a meniscus along the three corners of the triangular heat pipe structure, and vapor phase **126.** Alternatively lithium may be utilized as the heat transfer working fluid. In any case, the radius of curvature of the heat pipe working fluid meniscus varies across the length of the heat acceptance region of the heat collector and produces a pressure drop that drives vapor from the hot end of the heat pipe, located along the focal axis of the solar concentrator, to a sodium condenser **128** located inside the thermal battery **130.** A corresponding return flow of liquid sodium drains from the condenser into the hot section. This drain is primarily driven by capillary forces, but is also supplemented by gravity in a bend region **158** of the heat pipe illustrated in Figure 5 and discussed in greater detail below.

The shell **125** of the heat pipe shown in Figure 4 is preferably constructed of high strength, high temperature material, such as stainless steel, with an outer coating **124** that absorbs sunlight very efficiently, while at the same time having relatively low thermal emissivity. According to the reference: "Reducing the Cost of Energy from Parabolic Trough Solar Power Plants: Preprint", by H. Price and D. Kearney, available from the National Technical Information Service, report number NREL/CP-550-33208, published in January 2003, an envelope solar transmittance of 96%, a coating solar absorptance of 94.1%, and a coating thermal emittance of 9.1 % have been shown to be practical for solar energy collection systems. Assuming these values for the optical properties of the collection element, the efficiency for operation of the heat pipe at 1150 K, near the boiling point of sodium would be approximately 85% for an equilateral triangle cross section heat pipe **129** having a base width equal to 0.35% of the aperture of the concentrator mirror **110.**

With the addition of a highly reflective, semi-circular back-reflector **113,** shown in Figure 3a, this efficiency increases to approximately 90%. The back-reflector is positioned adjacent the heat collector **120** at a side opposite the parabolic trough and preferably rotatably mounted to the solar concentrator support structure **114** together with the solar concentrator. In the preferred example the back-reflector **113** has a semi-circular cross-section that is concentric to the heat pipe, and thus much of the thermal radiation from the heat pipe emitted in the direction away from the concentrator mirror is not lost, but is instead reflected back and refocused onto the heat pipe. Heat pipes having diameters significantly greater than 0.35% of the concentrator aperture absorb somewhat more power, but have greater radiating surface area and are thus less efficient. Heat pipes having diameters significantly less than 0.35% of the concentrator aperture are significantly smaller than the projected image of the sun on their surface, and thus have low collection efficiency. The efficiency of 90% with the back-reflector **113** represents the fraction of the solar energy incident on the concentrator mirror that is realized as heat to the hot side of the heat engine and is available for thermal storage. The solar collection coating **124** extends only over the portion of the heat pipe that is illuminated by the solar concentrator. For the interval between the end of the solar absorption region and the thermal battery, the heat pipe outer surface is high reflectively material, such as gold. This reduces the thermal emission from the heat pipe in regions where it is not designed to be collecting solar energy.

The fabrication methods for the heat collector **120** are well known to those skilled in the art of electronic vacuum tube fabrication. Indeed, the overall structure is similar to a long cylindrical "light bulb", consisting of a transparent envelope with a central high temperature "filament", i.e. the heat pipe **129.** As is well known in the art, such vacuum vessels can maintain a vacuum of sufficient quality to maintain thermal insulation between the filament and the glass envelope for years. A getter, such as titanium, (not shown) may be deposited on the inside of the heat collector envelope in the section between the solar concentrator region and the thermal battery in order to help maintain the requisite vacuum quality, and yet not degrade the heat collection efficiency.

### Thermal Diode Action of Heat Pipe

Since the heat transport mechanism in the heat pipe **129** is predominantly driven by capillary action when sunlit, a gentle bend in the heat collector **120** may be employed for the convenience of coupling the heat collector **120** to the thermal battery **130.** Moreover, a bend such as downward sloping bend **158** in Figure 5 between the thermal battery **130** and the solar concentrator **110,** also provides a "thermal diode" action for the heat pipe. The downward slope in the bend **158** away from the thermal battery **130** serves as a "drain" for the heat pipe working fluid during dark periods. Since the heliostat device acts autonomously to maintain the solar concentrator pointed at the sun whenever sunlight is available; during sunlit hours the sodium, for example, in the heat pipe remains active as a heat transfer medium. During periods of extended darkness, sodium in remote regions of the heat pipe from the thermal battery **130** will liquefy and then solidify. Liquid sodium will drain out of the thermal battery **130** by gravity down the bend **158** in the heat pipe **120.** Eventually, almost all of the sodium will be frozen in regions of the heat pipe below the bend region **158.** The remaining thermal connection out of the thermal battery is the thin stainless steel heat pipe shell, and the thin glass envelope, neither of which have significant thermal conductivity. In this fashion, the heat pipe acts as a thermal diode to prevent significant loss of heat from the thermal battery during periods of extended darkness, as at night, or during extended periods of heavy cloud cover, while having very high heat transport efficiency during sunlit periods.

### Thermal Battery Container

As previously mentioned and further shown in Figures 6 and 7, the thermal battery **130** includes (1) a heat storage container comprising layers **131,132,133** and (2) a heat storage medium, i.e. thermal battery core **136** contained in the heat storage container. With respect to the heat storage container, i.e. thermal battery container, it includes several layers of thin, highly reflective material **132,** separated by spacers **135,** and a highly reflective outer vacuum vessel **131,** surround a containment shell structure **133.** As shown in Figure 9, the containment shell structure **133** is further comprised of a primary containment shell **137** and a gold layer **139,** described in detail below. The layers of highly reflective material act as radiation shields, and provide thermal insulation of the hot thermal battery core **136.** The spacers **135** separating the multiple layers of reflective material in the preferred example are simply pointed dimples in the reflective material, having very little mass, and providing very little thermal contact between layers. The vessel **131** is evacuated to prevent conductive or convective degradation of the thermal insulation. A certain quantity of getter material, such as titanium, (not shown) may be deposited on the interior of the vacuum vessel **131** in order to maintain sufficiently high vacuum quality that the thermal insulation quality of the multi-layer insulation is preserved. As is well known to the person of ordinary skill in the art, for such a multi-layer insulation structure, designed to have negligible conductive and convective thermal loss, for a reflective material having an emissivity of 0.03 (as is typical of goal coatings) in a total of 15 layers, and an inner temperature of 1200 K, the effective thermal emissivity is 0.001, and the radiative cooling power loss rate is approximately only 120 W/m².

### Thermal Battery Core

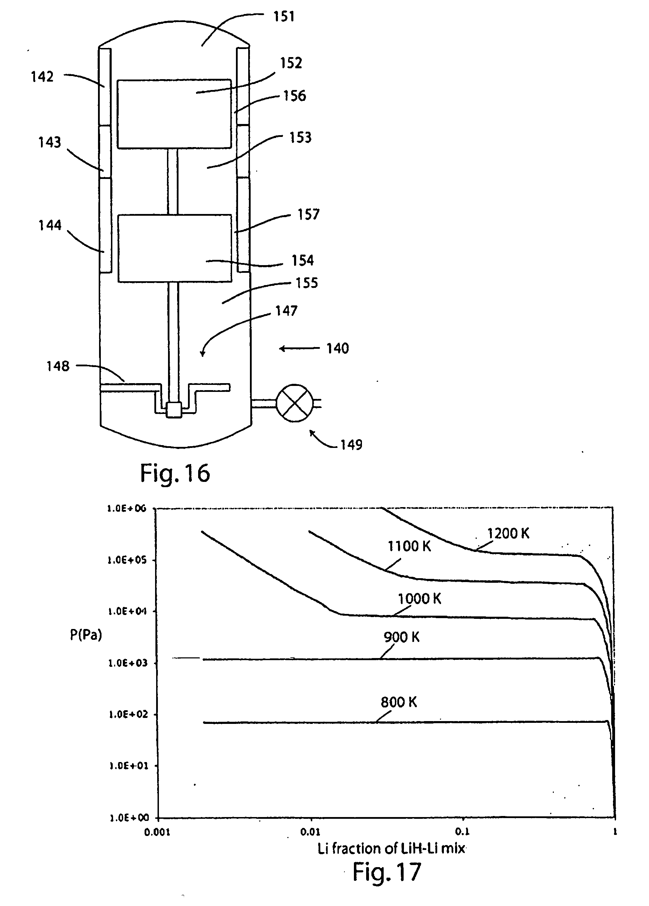

With respect to the heat storage medium, i.e. thermal battery core 136 contained by the thermal battery container, the utility of LiH as a thermal energy storage medium was previously discussed in the Background, and is due to the very high thermal energy per unit mass characteristic of LiH. However, in order to address the problem of lithium-hydride containment for high temperatures, e.g. 700°C and above, a small admixture of lithium is utilized in order to prevent a hydrogen explosion. Thus the heat storage medium, i.e. the thermal battery core **136,** consists of a mixture of lithium hydride and lithium metal, in equilibrium with various dissociation products **134,** including hydrogen gas and liquid phase lithium and lithium hydride. The most significant contribution to the total vapor pressure is the partial pressure of hydrogen. The equilibrium hydrogen pressure is a function of both the temperature and the fraction of Li in a LiH-Li mixture, as is displayed in Figure 17. Theoretically, pure LiH has an infinite hydrogen vapor pressure just above the melting point of LiH. It is therefore necessary either to provide a certain small quantity of Li along with the LiH in the thermal battery core, or to allow some hydrogen to permeate out of the container prior to final sealing.

The fabrication of the LiH and Li mixture may be achieved by starting with an initially pure quantity of LiH in the thermal battery fabrication process, and after initial hermetic sealing of the LiH in its primary containment shell **137,** consisting of a LiH-Li impervious alloy, test the quality of the seal by heating the LiH to just below the melting point. Some possible alloys that are relatively inert to Li are Mo-Z, MoRe, and Nb-Zr, as described in "High Temperature Liquid Metal Heat Pipes", by A. Bricard, T. Claret, P. Lecocq and T. Alleau, in the Proceedings of the 7th International Heat Pipe Conference, (1993). In addition, very low carbon steel is also inert to Li and LiH. According to the reference: "Compatibility of potential containment materials with molten lithium hydride at 800°C", by S.J. Pawel, published in the Journal of Nuclear Materials vol. 207, pp. 136-152, in 1993, "Stabilized (Nb and Ti) low carbon (<0.06%) steels are observed to be essentially inert in LiH at 800°C with stable carbides and no grain growth." The initial "seal test" heating step causes a significant pressure of hydrogen to build up in the LiH container. If the seal is bad, a relatively high hydrogen pressure will be observed. In contrast, if the container is well sealed, a much lower hydrogen pressure will still be seen outside the container, due only to hydrogen permeation. After a small quantity of hydrogen has been allowed to permeate out of the container, the LiH may be slowly raised (in order to avoid an excessive pressure spike) above the melting point, and sufficient hydrogen removed by permeation to bring the Li metal fraction remaining in the core **136** up to a desirable value.

As an example, by getting to a 2% Li metal mixture, the hydrogen pressure at a working temperature of 1100 K will be just over one atmosphere, as can be read from the plot in Figure 17. Once the desired LiH-Li mix has been reached, heating may be ended, and the LiH container allowed to cool. In order to prevent further significant hydrogen permeation, the inner LiH containment shell is coated with a gold layer **139.** The outermost layer of gold **139** provides a permeation barrier to the evolution of hydrogen. A gold layer of approximately 0.001" is estimated to yield a hydrogen containment lifetime of over a year. Gold has the additional advantage of having low thermal emissivity (approximately 3%), and thus provides for low thermal radiative cooling loss through the muti-layer thermal insulation.

Inner cavities inside the thermal battery **130** provide good thermal contact to both the sodium condenser **128** at the end of the heat pipe **129,** as illustrated in Figure 6. The external surface of the sodium condenser **128** is primarily cooled by hydrogen "boiling" as the LiH dissociates. Hydrogen bubbles rise to the vapor space, with some hydrogen-lithium recombination occurring in the liquid phase 136, and some recombination occurring in the vapor phase 134, until equilibrium is reached. The sodium condenser is sufficiently large to assure that the heat flux through the sodium condenser 128 into the thermal battery is below the critical heat flux marking the onset of so-called "transition" boiling, and thus maintains a high heat transfer efficiency.

### Heat Engine

Figure 16 illustrates a Stirling engine of the beta form, well known to practitioners in the art of heat engines, which serves as a preferred example of the heat engine **140.** Generally, a crank mechanism **147** converts the reciprocating motion of the Stirling engine to rotary motion of a propeller by a crankshaft **148,** as is well known to those skilled in the art. The Stirling engine has a hot side and a cold side, represented by a hot side heat exchanger **142** and a cold side heat exchanger **144,** respectively. The Stirling engine mechanism forces a working fluid, such as for example air or helium hermetically sealed therein, to cyclically pass from the expansion space **151** through the hot side heat exchanger **142,** the regenerator **143,** the cold side heat exchanger **144,** the compression space **153,** and back. The working fluid goes through a pressure cycle that is phased to deliver net power over the course of a cycle, through the power piston **154** to the crankshaft **148.** The phase of the variation of the compression space volume **153** relative to the expansion space volume **151** is approximately 90°. The gap **156** around the displacer piston is sufficiently large that only an insignificant pressure drop is developed between the expansion space **151** and the compression space **153.** In contrast, the gap **157** around the power piston is sufficiently small that almost no working fluid between the compression space **153** and the crankcase space **155.** Still, over many cycles, sufficient working fluid does flow through the power piston gap **157** that equilibrium is reached between the average pressure in the compression space **153** and the average pressure in the crankcase space **155.**

As illustrated in Figure 7, the thermal battery **130** generally and the heat storage medium in particular, e.g. the LiH/Li mixture, is in thermal contact with the hot side of the heat engine **140** for supplying heat thereto from the stored heat transported by the heat collection and transporting conduit, i.e. heat pipe **120.** The hot side heat exchanger **142** is primarily heated by conduction from the hot liquid phase 136 through the thin container wall **133.** Waste heat is removed from the cold side heat exchanger **144** of the heat engine **140** by forced convective cooling provided by ambient air flowing in through the inlet channel **108** past a set of cooling fins **141.** Since the air temperature at high altitude is very low, approximately 220 K between 10 km and 40 km, the cold side of the heat engine can be held relatively cool, and the resulting Carnot heat engine efficiency may exceed 70%. Achieving such efficiency is aided by the design of the air cooling channel **108** shown in Figure 2. The cool air forced past the cooling fins **141** may be driven by the airflow past the aircraft, a forward propeller **109** or a rearward ducted fan **150.** As displayed in Figure 7, the full length of the hot side heat exchanger **142** lies within the thermal battery core, while the full span of the regenerator **143** extends across the gap between the thermal battery core and the outer vacuum vessel wall, and the cold side heat exchanger **144** lies within the range of the cooling fins **141.** This arrangement maximizes the thermal contact to both the hot and cold thermal reservoirs, and produces a nearly linear temperature gradient across the regenerator.

### Stirling Engine Power Modulation

The power produced by the Stirling engine tends to increase with the mean pressure in the expansion space 151 inside the engine. Thus, venting the engine crankcase, through the crankcase pressure relief valve **149** shown in Figure 7, to the ambient air, for example, serves to decrease the output power. Correspondingly, increasing the crankcase pressure serves to increase the output power.

Pressurization of the crankcase above the ambient atmospheric pressure is preferably achieved by the action of a crankshaft pump **145** that produces a pumping action as the crankshaft rotates, to self-pressurize the crankcase. The crankshaft pump **145** comprises at least one helical groove on either the crankshaft surface or a journal surrounding the crankshaft. It is appreciated that one or more helical grooves may be utilized in the same direction for greater pumping performance. And a filter **146** prevents particulate contamination in the working fluid from clogging the passageways in the crankshaft pump **145.**

In the preferred example, the crankcase pressurizes to a value determined by the pressure drop across the crankshaft pump and the outside atmospheric pressure, for the case that the working fluid is simply ambient air. This pressure drop is in turn determined by the design of the grooves, both in terms of the number of grooves, and the groove shape. The steady state speed of the crankshaft pump is designed to produce a given mean operating pressure inside the crankcase of the engine. A pressure drop of one atmosphere across the crankcase pump, for example, produces an operating pressure that is relatively insensitive to the operating altitude of the aircraft. At an altitude corresponding to 10% of atmospheric pressure, the engine operating pressure would be approximately 50% that corresponding to sea level.

An alternative example is shown in Figure 20 using helium as the working fluid in the Stirling engine, includes a closed and sealed reservoir **160** (the working fluid pressure vessel) serving to contain helium that is vented from the crankcase pressure relief valve **149,** and return the released helium to the crankshaft pump **145** in a closed cycle through a filter **146.** The pressure of the helium in the sealed chamber is much less than the engine operating pressure, and thus the outer crankshaft journal bearing **162** may readily act as a gas tight seal to prevent significant loss of helium to the ambient air. In another example, the working fluid may be hydrogen, and in addition, a hydrogen permeable cap **163** (even high temperature steel will be adequate to this end under many circumstances) may be used on the hot end of the Stirling engine. In this case, the slow loss of hydrogen from the thermal battery core **136** may be balanced by a slow gain from the Stirling engine hydrogen working fluid through the end cap **163,** thereby extending the hydrogen containment lifetime of the thermal battery to an arbitrary degree.

### Alternative Configurations

And Figures 14,15, and 18 show alternative arrangements of the solar thermal power plants for aircraft of various configurations. Figure 14 illustrates the aircraft **100** having two solar power plants, one on each wing **102** of the aircraft. In particular, Figure 14 shows multiple wing-mounted solar energy collection and storage systems directly coupled to a corresponding wing-mounted heat engine. Thus each solar power plant of each wing is self-sustainable and independently operable. Figure 15 shows a fuselage-mounted solar energy collection and storage system with a multiplicity of wing mounted propellers driven by a transmission system **107.** It is appreciated that the propellers may be arranged to push the aircraft, as specifically shown in Figure 15, or alternatively to pull the aircraft (not shown). And Figure 18 shows a fuselage-mounted solar energy collection and storage system with a stern mounted ducted fan propulsion system **150.** As shown, the heat engine 140 and cooling fins **141** in particular are cooled via an air inlet 108 that also serves to supply airflow to the ducted fan propulsion system.

### B. Residential Solar Thermal Power Plant

The solar thermal power plant which was previously discussed for solar powered aircraft can also be incorporated for use in residential and commercial ground-based applications, hereinafter referenced collectively as "residential solar-thermal power plants." When used in such fixed, stationary implementations additional benefits may be realized such as for example cost efficiencies which can make such residential solar thermal power plants economically attractive for domestic consumption. While the following description focuses primarily on fixed structure applications, it is appreciated however that the residential solar thermal power plant of the present invention may also be mounted on other structures which are not necessarily fixed or ground based, such as for example on boats, trains, or other mobile but earth-bound platforms, to realize similar benefits of efficient solar-thermal energy generation.

Reference numerals used in the following description for the residential solar thermal power plant are listed in Table 3.

**Table 3**

| | | | |
|---|---|---|---|
| 210 | Parabolic trough concentrator mirror | 231 | Collector loop water valve |
| 212 | Transparent windshield | 232 | of liquid level |
| 213 | Mirror plane of symmetry | 233 | Spent steam line |
| 214 | Concentrator mirror support | 234 | of boiling region |
| 215 | Concentrator mirror mount/rotator | 235 | Collector loop water pump |
| 220 | Heat collector | 236 | Engine loop water pump |
| 222 | Borosilicate thin-walled envelope | 237 | Automatic check valve |
| 223 | Immersion lens thick-walled tube | 238 | loop steam valve |
| 224 | Evacuated space | 239 | loop water valve |
| 226 | Textured steel heating tube | 240 | Heat-powered engine (e.g. steam engine) |
| 227 | Black coating | 241 | Pressure vessel |
| 228 | Heat transfer fluid space; flow channel | 242 | pebbles |
| 229 | Representative sunray | 244 | Condensed water tank |
| 229A | Representative sunray A | 245 | Upper pebbles |
| 229B | Representative sunray B | 248 | Crankshaft |
| 229C | Representative sunray C | 249 | Generator |
| 229D | Representative sunray D | 250 | Cold water supply line |
| 229E | Representative sunray E | 251 | line |
| 229F | Representative sunray F | 260 | Residential hot water supply |
| 229G | Lowest sunray absorption point | 261 | Radiator |
| 229H | 229Highest sunray absorption point | 262 | Cold water supply |
| 230 | Thermal energy storage reservoir | 270 | North star |

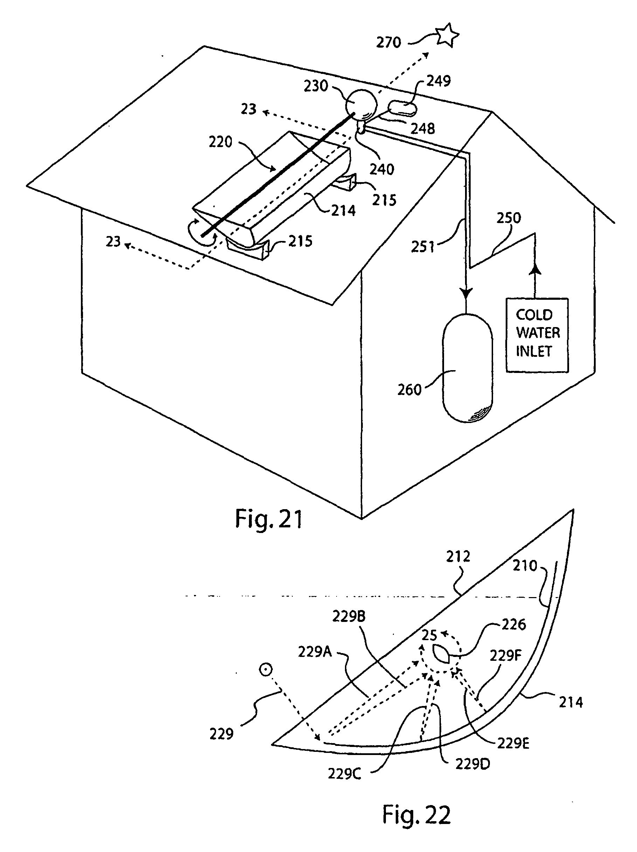

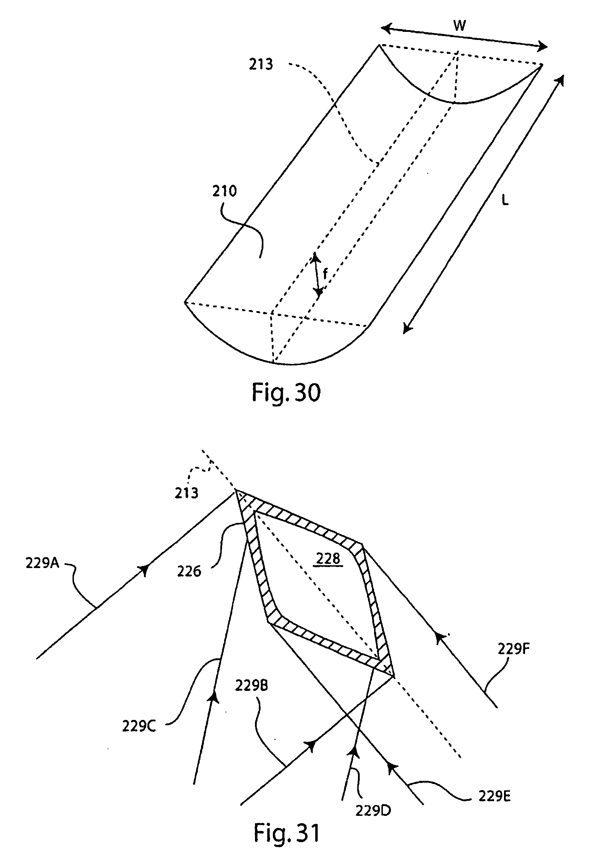

Figure 21 in perspective view shows an exemplary embodiment of the residential solar thermal power plant of the present invention having several main components, including a solar concentrating mirror **210** capable of rotating about a rotation axis and focusing sunlight along a focal axis, a heat collector **220** (similar to heat collector **120)** positioned along the focal axis of the mirror to absorb the focused/concentrated sunlight, a thermal energy storage reservoir **230** connected to an output end of the heat collector, and a heat-powered engine **240** operably connected to the thermal energy storage reservoir, all of which are similar in construction and operation to those previously described for the solar thermal aircraft. In particular, the preferred shape of solar concentrating mirror **210** for use in the residential solar thermal power plant is also that of an elongated parabolic trough, as illustrated in Figure 30, which has a length L in the longitudinal direction of its focal axis and a parabolic curve cross-section with a reflective inner surface that focuses sunlight on the focal axis. The concentrator mirror has a width W, and a longitudinal plane of symmetry **213** that passes through both the focal axis of the parabolic curve halfway along the width W, and the center of the parabolic curve at the base of the trough, as shown in Figure 30.

And Figure 22 shows an axial cross-sectional view of the concentrating mirror **210** and heat collector of the residential solar thermal power plant having heating tube **226** (representing heat collector **220** as its primary component) coaxially positioned along the focal axis of the mirror so that sunlight focused by the mirror is incident on the heating tube **226** to heat a working fluid (not shown) inside the tube. In order to rotate the concentrating mirror about its rotation axis (e.g. focal axis), an actuator device, motor, or other means **215** for rotating the mirror similar to that described for the solar thermal aircraft is preferably used, with the exception that the actuator device is preferably a clockwork drive which operates to turn the mirror based on a predetermine rotation schedule, such as 24 hours per cycle, so as to follow the sun during the day and maintain focused sunlight concentrated onto heating tube **226.**

Unlike the solar thermal aircraft, however, these main components of the residential solar thermal power plant are preferably mounted on a fixed structure that is sufficiently exposed to the sun, such as for example a residential rooftop shown in Figure 21. Also unlike the solar thermal aircraft, the reject heat from the heat-powered engine is preferably further exploited for its heating value rather than simply dumped to the environment. As such, the thermal energy collected by the residential solar thermal power plant may be used in various ways for domestic or commercial consumption, such as for use directly to offset domestic heating requirements, for conversion into mechanical energy for pumping water via the heat engine, or for further conversion into electrical energy with an electric generator. For example, Figure 21 illustrates the residential solar thermal power plant for use in a combined water heating and power application, where useful hot water is derived by connecting a cold water utility line to the heat engine to provide engine cooling. In particular, domestic cold water supply line 250 is shown connected to heat-powered engine system **240** of the power plant and then to hot water storage tank **260** via warm water return line **251.** Figure 21 also shows the residential solar thermal power plant connected by crankshaft **248** to an electric generator **249** for generating electricity.

As illustrated in Figure 21, typical residential power consumption needs are such that the concentrating mirror, which is the single largest component of the current system, need occupy only a few square meters per person (which is a small fraction of a typical rooftop area), especially in relatively sunny regions such as for example the Southwestern United States. In contrast to the SEGS plants discussed in the Background section, and most other currently deployed centralized power plants using parabolic trough solar collectors, there is no "row to row" shadowing produced by the concentrating mirror of the residential solar thermal power plant because it is isolated from other mirrors which may be mounted on the rooftops of other buildings or structures. In a centralized power plant, the cost of land becomes a factor, and there is a tradeoff between the acreage required and the degree of self-shadowing. In contrast, in the residential case presented here, with more than enough roof-top area available for the concentrator mirror, there is no need to incur the self-shadowing penalty. Thus the roof-top area per kW of capacity devoted to the solar collector is less than a third the corresponding land area per kW needed in large centralized parabolic trough solar thermal power plants.

It is appreciated that when mounted as such for residential applications, the residential solar thermal power plant is often directly exposed to the elements, e.g. wind, rain, snow, dirt, etc. To protect them from environmental effects, a windshield assembly is preferably provided to surround mirror **210** and tube **226.** Figure 22 shows a preferred example of the windshield assembly having a transparent window **212** and mirror support structure **214.** The windshield prevents wind from unduly cooling the surface of tube **226** which can lower the system heat transport efficiency. Additionally the protection provided by the windshield allows the structure of collector mirror **210** to be made of lightweight material. Furthermore in an exemplary embodiment of the residential application, a portion of the home space heating requirement in winter can be supplied by circulating air from the home through the interior of the windshield volume where it is heated by the heat collector tube.

### Polar Alignment of Focal Axis of Collector Mirror

In the exemplary embodiment of the residential solar thermal power plant shown in Figure 21, the focal axis of mirror **210** is parallel to the Earth's rotation axis, and is thus substantially aligned with the North Star **270** for northern hemisphere locations. The heat collector **220** is also coaxially positioned along the focal axis of the concentrator mirror so that it too is aligned parallel with the earth's rotational axis, and substantially aligned with the North Star for northern hemisphere locations. First, in order to properly adjust the orientation of the mirror and the heat collector, a suitable mounting structure known in the art, shown generically as **215** in Figure 21, is provided to enable one end of the mirror and heat collector (i.e. the outlet end) to be elevated higher than the other end of the mirror and heat collector (i.e. the inlet end). For example each end may be mounted via adjustable mounting brackets. Furthermore, the mounting structure mounts the mirror and heat collector so as to rotate about the focal axis, i.e. the focal axis is the rotational axis of the mirror.

To achieve proper alignment with the earth's rotational angle, various methods may be utilized. For northern hemisphere locations, one example utilizes a small telescope provided with and held parallel to the mirror/collector assembly to locate the North Star on a clear night, as shown in Figures 21, 23, and 24. In this manner, during installation or after possible house settling, slight adjustments of the alignment of the collector may be performed so that the North Star is no more than a few minutes of arc off center. Substantial alignment of the focal axis of the mirror to point to the North Star is most expeditious in the Northern hemisphere by virtue of the easy visibility of the North Star, but the corresponding South Celestial Pole alignment is also possible in the Southern hemisphere as well by observation of fainter reference stars.

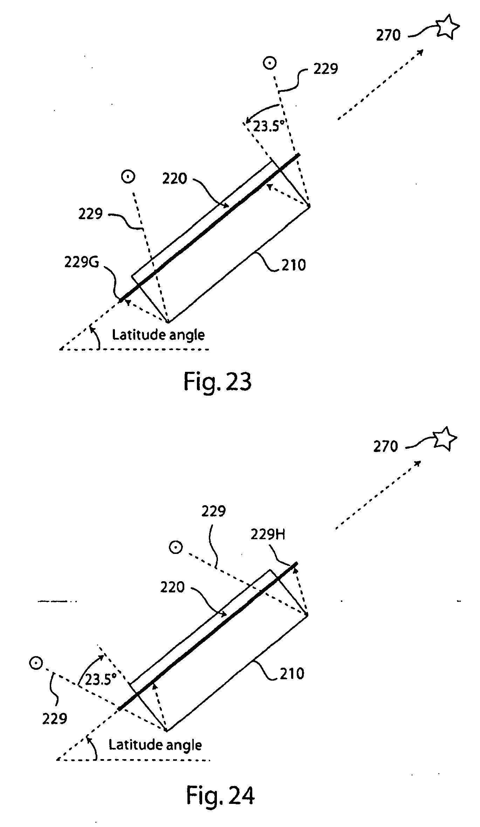

An alternative method of achieving correct parallel alignment with the earth's rotational axis uses the latitude coordinate of the mounting location and a compass to determine the direction of due north, as shown in Figures 23 and 24. In this case, the mounting structure would angle the focal axis above a horizontal plane by an angle equal to the local angle of latitude, and inclined towards one of the Poles (for non-zero latitudes). Angular gradations may be provided on the mounting structure to enable this manner of angular adjustment. For northern hemisphere locations the focal axis is inclined towards the North Celestial Pole, and for southern hemisphere locations the focal axis is inclined towards the South Celestial Pole.

With the focal axis of the parabolic trough substantially parallel with the earth's rotational axis, the angle between the normal to the collector axis and the direction to the sun will not vary by more than 23.5° over the course of a year, i.e. rays from the sun are never more than 23.5° from normal incidence to the aperture plane of the concentrating mirror. These extreme deviations occur on the summer solstice, the longest day, and on the winter solstice, the shortest day. The paths for a pair of extreme rays from the sun on the summer solstice are illustrated in Figure 23, and the paths for a pair of extreme rays from the sun on the winter solstice are illustrated in Figure 24. The lowest axial position, throughout the course of a year, struck by concentrated sunlight is represented by point 229G in Figure 23, and is reached at noon on the summer solstice. Similarly, the highest axial position, reached at noon on the winter solstice, is point 229H in Figure 24. The active length of collector assembly 220 that is ever exposed to concentrated sunlight over the course of the year extends only from point **229G** to point **229H.** The maximum degree of foreshortening in the polar aligned case is only attained on the solstices and is only 91.7% in the extreme.

The limited length of exposed collector tube and the small degree of foreshortening in the polar aligned case is in contrast to that for the horizontal deployment typical of commercial parabolic trough collectors. The annual average foreshortening factor associated with this incident angle effect is listed in the first row of Table 1, shown in the Summary section. Similarly, the end losses associated with conventional horizontal collectors for solar angles for which the focused sunlight converges at positions along the axis beyond the extent of the collector tube are listed. In the polar orientation of the present invention this loss is avoided by having a heating tube that is slightly longer than the trough itself, as illustrated in Figures 23 and 24. The heating tube is shown positioned to extend beyond both ends of the mirror by up to an amount substantially equal to the focal length of the mirror times tan(23.5 degrees), in order to capture all of the concentrated sunlight, including during the solstices. This incurs very little extra cost, but improves the collection efficiency. This efficiency factor is listed in the second row in Table 3.

By having the axis of the solar collector inclined at an angle substantially equal to the local latitude, and parallel to the earth's rotation axis, several benefits are obtained over the case with a horizontal collector. As previously mentioned, since the angle of the sun's rays to the axis of the solar collector does not deviate by more than 23.5° from normal incidence over the course of the year, the projected mirror area available for solar collection changes by only +/-4% over the course of the year. This is in contrast to horizontally deployed parabolic troughs, typical of current commercial solar thermal energy power plants such as SEGS, for which the mean incidence angle cosine is significantly less. Accounting for the variation of this angle of incidence throughout the year, the conventional horizontally deployed parabolic troughs have a geometrical efficiency factor of 87.3%, while for the case that the angle of the trough is aligned with the North Star, this geometrical efficiency factor increases to 95.9%. The increase in overall solar collection efficiency with respect to horizontal troughs from this deployment angle alone is thus approximately 9%. Another advantage of inclined orientation: by having the thermal energy storage located at the upper end of the solar collector, the liquid phase of the two-phase working fluid in the heat collector may be very effectively returned from the condenser to the boiler primarily by gravitational action. Such heat collectors are called thermo-siphons, and are well known in the art and are commercially available. Another significant advantage of having the collector axis aligned with the North Star is that rotation of the parabolic reflector may be driven by relatively simple and inexpensive clockwork, with only occasional need for adjustment to either run a bit faster or run a bit slower. The control mechanism needed for such gradual adjustments can be very simple and inexpensive.

### Concentrating Mirror Shape

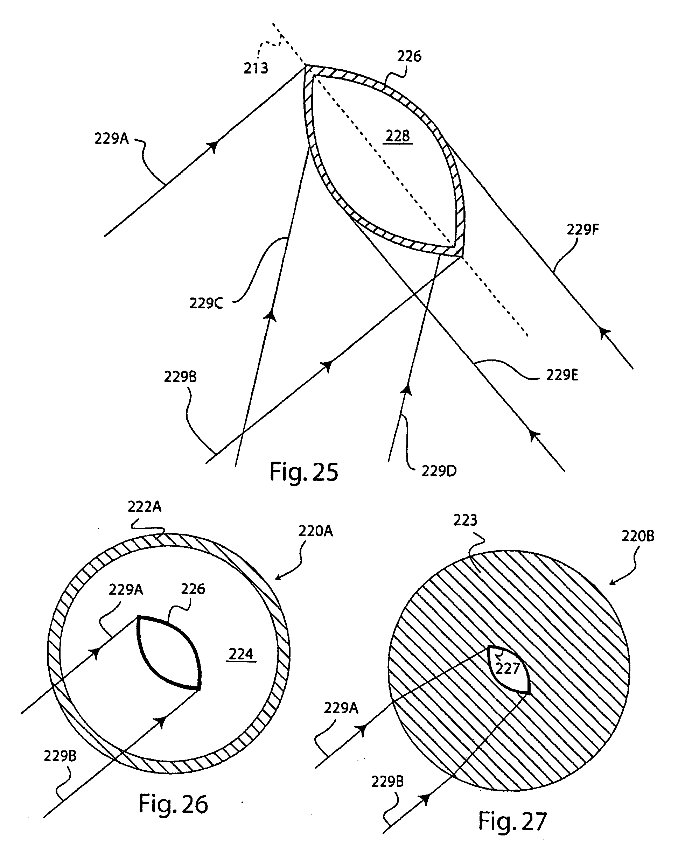

As previously mentioned the preferred shape of the concentrator mirror **210** is that of a parabolic trough which is straight in the longitudinal direction and which has a parabolic curve cross-section in the perpendicular plane defining the trough width. Furthermore, the focal length, f, for the parabolic curve is preferably equal to 25% of the full width W of the trough. In other words, the focal ratio, designated by f/ # in optics nomenclature, is preferably about f/0.25. At this ratio, the relative size of the absorber (e.g. the outer surface of tube **226** in Figures 22 and 25) required to fully capture all reflected sunrays, assuming a perfect parabolic figure for mirror **210,** is minimal and the corresponding solar concentration factor is maximal compared to any other f/# focal ratio. In particular, for this shape and f/0.25, solar rays incident at the extreme edge of the trough are reflected by approximately 90°, as shown in Figure 22 for representative incoming sunray **229.** Since the angular diameter of the sun, as seen from Earth, is approximately ½ degree, the rays reflected from any given point on mirror **210** diverge by this angle as they approach the focal axis. The divergence of such ray bundles from three separate, representative points is shown in Figure 22 with a great deal of exaggeration in their angular spread. In particular, rays **229A** and **229B** correspond to sunlight that has reflected from the left hand extreme of mirror **210,** i.e. from incoming sunray **229.** Similarly, rays **229C** and **229D** correspond to light reflected at an intermediate position on mirror **210,** while rays **229E** and **229F** correspond to light reflected from near the middle of mirror **210.** With the f/0.25 as the focal ratio, the spread near the focus of parabolic mirror **210** between rays 229A and **229B** is twice as great as the spread between rays **229E** and **229F.** This can be seen in the illustration in Figure 25 showing a close up in the vicinity of the focal axis as shown in Figure 22, but without exaggeration in the angular spread of the various sunrays.

The relative efficiency for f/# values differing slightly from the optimal f/0.25 varies as follows. For f/# values between f/0.2 and f/0.3, the relative concentration factor decreases by 2% from the maximum possible at f/0.25, while for f/# values between f/0.16 and f/0.4 the maximum achievable concentration factor decreases by 10%.

### Collector Tube

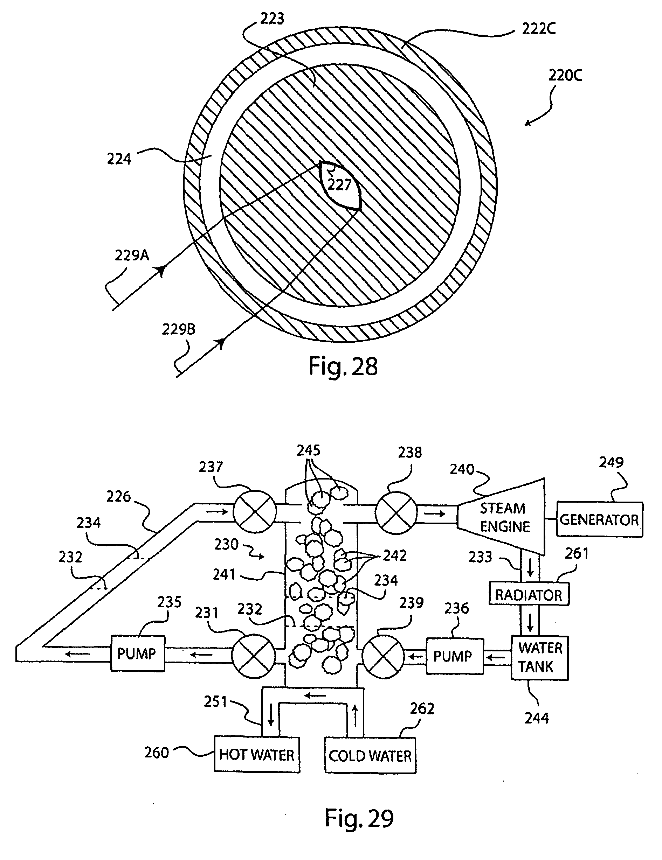

The primary component of the heat collector **220** shown in Figure 21 is the heating tube **226** shown as a cross-section in Figure 22 coaxially positioned along the focal axis of the parabolic trough concentrating mirror **210.** In Figure 22, the heating tube **226** is shown centered between opposing edges of the parabolic profile of mirror **210** at the focus of the preferably f/0.25 mirror. In general, the heating tube is positioned at the focus (i.e. focal axis) of the mirror, whatever its focal length. The heat collector **220** and the heating tube **226** are similar to the heat collector **120** and heat pipe **129,** respectively, previously discussed with respect to the solar thermal aircraft. Various example of the heat collector cross-sectional shape are shown in Figures 25-28, and 31 that enable highly efficient operation. The heating tube may be an optically transparent thin-walled tube, such as shown in Figures 25 and 31, or in the alternative, the heating tube may be an optically transparent thick-walled tube **223** functioning as an immersion lens (Figure 27) to magnify an inner surface forming a flow channel. As shown in Figure 26, the heat collector **220** may optionally also include additional components, such as a tubular glass envelope **222A** providing vacuum insulation around heating tube **226.** And as shown in Figure 28, the thick-walled tube may also additionally have an optically transparent thin-walled evacuated tube/envelope **222C** providing vacuum insulation around collector tube **226.** In any case, the improved collection efficiency enables the heating tube **226** to be much shorter, relative to the width of collector mirror **210** than in the conventional art. For example, in the prior art DISS, Direct Solar Steam, arrangement, the length to width ratio is approximately 46. Such an unfavorable aspect ratio would require a great deal of "folding" to fit onto a typical residential rooftop, and this incurs a significant degree of extra piping, as well as extra inefficiency. In the present case, the length to width ratio can be as low as one or two without undue efficiency loss.

Preferably, heating tube **226** comprises a hollow type-316 stainless steel tube with a sputter-etched surface. Such surfaces on type-316 stainless steel are known to be resistant to deterioration, and are feasible for use in air at temperatures up to 400°C. The preparation and characteristics of such surfaces are known in the art and described in, for example, "Sputter Etched Metal Solar Selective Absorbing Surfaces for High Temperature Thermal Collectors", by G.L. Harding and M.R. Lake, published in Solar Energy Materials, vol. 5 (1981), pp. 445-464, hereby incorporated by reference. Solar absorptances for sputter-etched stainless steel are observed to be 93%, with a thermal emittance of only 22%. It is further known that type-316 stainless steel is suitable for use with Sodium, Potassium or high pressure steam as heat transfer fluids.

### Collector Tube Shape

Figure 25 shows an enlarged view of the circle 25 of Figure 22 and of an example of tube 226 surrounding a flow channel having cross-sectional profile that is oblong in shape having a major axis corresponding to the largest diameter of the channel and a minor axis corresponding to the smallest diameter of the channel, and roughly resembling a lemon shape. In the example Figure 25, the oblong profile is preferably produced by two facing parabolic surfaces joined to form two opposing vertices, with the angle formed at each of the opposing vertices preferably 90°. In another exemplary case shown in Figure 31, the oblong cross-sectional profile is preferably produced by an oblong diamond-like shape having four sides with two opposing vertices along the major axis and two opposing vertices along the minor axis. In either case, the oblong profile preferably has a major to minor axis length ratio of 2 to 1, but with either straight outer sides, as shown in Figure 31, or curved sides, as shown in Figures 25 through 28.

In any case, the major or long axis of this profile is preferably located within the longitudinal symmetry plane 213 (shown in Figure 25 and in Figure 30) of concentrator mirror 210, and must thus rotate along with the mirror to follow the sun. In the interior of tube **226** is a channel 228 for the passage and transport of a heat transfer fluid, i.e. working fluid. The length-to-width ratio for the oblong cross-section of tube **226** (where the length is measured along the major axis, and the width is measured along the minor axis) is preferably two to one. As illustrated in Figures **24** and **25****,** such a profile allows the interception of all focused sunlight from mirror **210** with a substantially reduced (compared to a circle) surface area for tube **226,** assuming that mirror **210** has a perfect parabolic figure. In fact the surface area corresponding to such an oblong tube fashioned of two facing parabolic segments is only 73% that of a circular tube having the same diameter as the major axis of the oblong tube. Also, the hydraulic diameter (i.e. four times the central channel flow area divided by the perimeter of the central channel) is only 58% that of the circular case, neglecting the wall thickness. This decreased hydraulic diameter is helpful for heat transfer purposes.

It is also important to note the angle of incidence of the concentrated sun rays as they meet the surface of tube **226.** Rays **229A** and **229B** encounter the surface of tube **226** at an incidence angle of 45°. In contrast, for a circular collector tube having the same diameter as the major axis of the oblong shape, the incidence angle for such rays would be 90°. On the other hand, rays **229E** and **229F** encounter the surface of tube **226** at an incidence angle of 90°, while for the circular tube case, the incidence angle would be 45°. Since the marginal rays can encounter the surface of a minimally sized tube **226** at relatively high angles of incidence, it is important for the absorptance of the surface to remain high, even for such grazing angles. According to the reference by Harding and Lake mentioned in the previous section, the relative solar absorptance for sputter etched type 316-stainless steel is above 90% at an incidence angle of 60°, and is about 80% at an incidence angle of 80°. Because the solar absorptance remains high at very high incidence angles, it is feasible for the major axis of collector tube 226 to be no larger than approximately 0.45% of the width W shown in Figure 30. It is notable that at the closest approach of the earth to the sun, the sun's angular diameter, viewed from earth, is such that the major axis of the collector tube would need to be precisely 0.474% to cover the image with a perfect f/0.25 parabolic concentrating mirror, while at the farthest distance from the sun, the collector tube major axis would need to be 0.458%.

It is appreciated that with proper suppression of convective losses, collector assembly heat losses tend to be dominated by thermal radiation from the hot central tube. In turn, the power loss associated with thermal radiation is directly proportional to the area of the radiating surface. By decreasing the area of the radiating surface as described with the oblong profile, the efficiency of the collector is improved by the factor listed in the first row in Table 1 in the Summary section. The magnitude of the thermal power loss does increase with higher temperature. The numerical value in Table 1 is calculated assuming a temperature of 400°C, as is currently used in the SEGS plants.

Since the radiating area of the present tube is so much reduced compared to the conventional art, it is feasible to attain higher heat transfer fluid temperatures than for the conventional parabolic trough solar collectors. This can enable more efficient heat engines to be employed. On the other hand, if the conventional heat transfer fluids are used, such as those in the SEGS plants, and the temperature is limited to 400°C, the efficiency will improve substantially by virtue of the decreased thermal radiation losses.

It is appreciated, however, that while a circular shaped tube is not quite as efficient as the oblong cross-sectional tube, it is not necessary to rotate a circular tube with the collector mirror, and a circular tube can thus be completely stationary with respect to the ground, and this can offer a compensating simplicity of operation.

### Vacuum Envelope

Although windshield **212** substantially reduces wind generated convective cooling of tube **226,** an optional transparent glass envelope may be provided to further protect and provide thermal insulation to tube **226.** Figure 26 shows an example of a collector assembly **220A** having a tube-shaped, circular profile, transparent glass envelope **222A** that is preferably radially spaced from and arranged coaxial to tube **226,** with a vacuum **224** maintained within transparent glass envelope **222A** to eliminate convective cooling of tube **226.** In this example, heat collector assembly **220A** is considered the combination of tube **226,** glass envelope **222A,** and vacuum insulation **224** therebetween. Such vacuum tube construction is well known in the art for parabolic trough solar collectors. With thin walled glass envelopes, there is essentially no degradation of the benefit of the lemon shaped collector itself. There is, however, an approximately 5% loss of sunlight intensity, assuming the benefit of an anti-reflection surface coating (not shown), associated with transmission through glass envelope **222A.** The glass vacuum envelope may be employed especially in applications where natural convection is expected to produce a greater loss of power than 5%, such as for example with very high temperature operation as is necessary for the aircraft example. For residential applications the glass vacuum envelope may be used, for example, where the collector tube is not used directly for heat recovery, such as previously described where a portion of residential heating is provided by passing air through the windshield interior. It is appreciated that in portions of the system for which concentrated sunlight illumination is not present, such as the section between the collector mirror and the thermal storage shown in Figure 21, while it may be advantageous to have a vacuum containing envelope surrounding heating tube **226,** it is not necessary that it be transparent.

### Immersion Lens Heat Collector

Figure 27 shows an exemplary heat collector embodiment **220B** having an optically transparent thick-walled heating tube **223** having a convex curvilinear outer surface and an inner surface forming a flow channel, with a sunlight absorbing material (e.g. black coating **227)** coating the inner surface. As such, the outer surface functions as an immersion lens for magnifying the dimensions of the inner surface and the flow channel. The thickness of the tube wall preferably has a ratio of an outer surface diameter to the largest inner surface diameter (e.g. length of the major axis of the oblong cross-sectional tube **226)** preferably being at least three to one. The result of having such a thick-walled optically transparent heating tube is that, as viewed from the outside, the central oblong shaped flow channel appears to be magnified. The degree of magnification depends on the index of refraction of the glass. For inexpensive borosilicate glass, e.g. "Pyrex", the magnification factor is 140% to 150%. The significance of this magnification factor is that the size of the flow channel needed to absorb all of the sunlight focused onto the axis of parabolic trough concentrator mirror 210 can be reduced to about 2/3 the size of an unmagnified tube.

An example of the effect of this lens action on the converging sunlight is illustrated in Figure 27, drawn to the same scale as Figure 26, for rays **229A** and **229B.** As these incoming rays encounter the surface of the thick glass, they bend by refraction, and the solar flux becomes more highly concentrated as it is absorbed at surface **227.** Such immersion lens action is well known, as in the context of oil immersion microscopy, for example. Since the collector tube appears optically to be larger, it is possible to achieve a higher concentration of the incident sunlight than is ordinarily thought to be feasible with parabolic trough solar collectors.

Additionally, with such a reduced cross-section of the collector tube, the axial length of tube **226** relative to the width of collector **210** may be reduced by more than a factor of 25 relative to conventional parabolic trough geometry, such as that studied in the prior DISS, Direct Steam Generation, experiments, and still maintain equivalent heat transfer. This allows the collector to be much more compact than for conventional parabolic trough collectors, and facilitates the packaging of such systems on typical residential rooftops.

Figure 28 shows another exemplary embodiment which modifies the immersion lens **220B** of Figure 27 by providing a radially-spaced thin-walled glass vacuum envelope **222C** to surround the thick glass envelope with a vacuum region **224** between them to provide even greater thermal insulation.

### Residential Thermal Energy Storage

The power plant of the present invention preferably also includes a thermal storage reservoir, such as **230** in Figure 21 operatively connected to the outlet end of the heat collector. Preferably, the thermal storage reservoir and the heat collector are fluidically connected so that the heat transfer is achieved by using the same working fluid for both the heat collector and the thermal storage unit. The preferred medium for thermal energy storage in the residential embodiment is a combination of water and rock, as it is much less hazardous and much less expensive than the LiH-Li material needed for the aircraft example Furthermore, water is also suitable as the heat transfer medium used in heat collector tube **226,** replacing the more expensive and more hazardous sodium preferred in the aircraft example. In a third role, water is also suitable as the working fluid for the heat engine, which thus becomes a familiar steam engine **240,** and provides a less expensive, and more readily replaceable medium than the hydrogen or helium preferred in the aircraft example. Finally, in a fourth role, water is also suitable as a consumable. The use of a single substance, water, for all four of the roles: heat transfer at the heat collector, thermal energy storage, engine working fluid, and hot water supply virtually eliminates the heat exchange inefficiencies associated with transfer of heat from the heat transport fluid to the thermal energy storage reservoir, from the thermal energy storage reservoir to the working fluid of the heat engine, and from the thermal energy storage reservoir or the heat engine to the consumable hot water supply. As such heat exchange processes inevitably incur temperature drops, their elimination can translate either into more efficient operation, or lower maximum temperature requirements for a given level of efficiency. Use of water as a thermal medium is sufficiently benign that, with appropriately clean, oil-free pumps, valves and engine components, the hot water may be used directly for washing dishes, cleaning clothes, or even cooking. Financially, the cost of water and rock as the thermal energy storage medium is so low that it is essentially only the cost of the containment that matters.

### Thermal Energy Conversion and Power Generation

Although single gas phase heat engines, such as the Stirling engine discussed above in the context of the aircraft example, can take advantage of the very low ambient air temperature at high altitude and can thereby achieve very high thermal efficiency, in the context of the ground-based environment, without such low temperature capability, the familiar steam engine is preferred. This is especially so, considering the advantages of water as the thermal energy medium.

The use of steam to generate power is very well known and very well developed technology, and there is such a myriad of approaches that the optimal configuration will depend strongly on the nature of the desired energy product. At one extreme, it may be that all that is required is a supply of high pressure, high temperature steam for some particular process of interest, and there may be relatively little requirement for power. At another extreme, it may be that it is essentially only electric power that is required, and the reject heat is just a nuisance. In the next section, among these myriad cases, the specific case appropriate for the average power and energy needs of a residential consumer is considered. In this example, in line with the needs of a typical residential energy consumer, comparable quantities of heating energy and electrical energy are needed over the course of a year, but with more heating required during the winter, and more electric power required during the summer. It is therefore important to have flexibility in the conversion of concentrated solar energy into heat or electric power.

As shown in Figure 21, the thermal storage reservoir is preferably in contact with the heat-powered engine. As such, there is also not an extensive piping component between the thermal energy storage reservoir and the heat engine, as there is in the SEGS plants, for example. Instead, the thermal energy storage reservoir is in very close thermal contact with the heat engine, and this loss is virtually eliminated. Since essentially all of the heat transfer occurs through extremely effective autonomous, phase-change boosted effects, involving both boiling in the collector and condensation in the thermal storage reservoir, there is very little parasitic power loss associated with actively pumping heat transfer fluids around through extensive piping interconnections and heat exchangers.

One of the benefits of thermal energy storage in the residential case is that momentary interruptions in the solar illumination do not cause corresponding upsets in the heat supply to the engine. While the primary role of the thermal energy storage in the solar aircraft application is to enable overnight flight, in the residential application it is not always necessary to store an entire day's worth of heat. In some cases it may be economically advantageous to have only a relatively short storage duration capability. Another benefit of thermal energy storage in the residential case is that the normal noon-time peak in the solar illumination may be distributed over a number of hours in the afternoon, thus allowing a lower maximum electric generation capacity design, and thereby a less expensive heat engine and electric generator. Furthermore, by storing thermal energy, the typical noontime peak in solar energy supply may be better matched to the typical mid-afternoon peak in electric energy demand. At another extreme, for energy self-sufficiency, the thermal energy storage capacity may be made great enough for weeks to months of storage, so that the dependence of solar power on the vagaries of the weather may be virtually eliminated.

### Example System Operation: Direct Steam Generation

Figure 29 shows a schematic diagram of an exemplary steam power plant of the residential solar thermal power plant of the present invention. As shown, heat collector tube **226** is inclined from a lower end to an upper end, with the upper end connected to the top of thermal energy storage reservoir **230** through an automatic pressure regulating check valve **237,** and the lower end of heating tube **226** connected to the bottom of thermal energy reservoir **230** via water pump **235** and water valve **231** to form a fluidic circuit characterized as the collector loop. Arrows indicate the normal flow direction of water through this circuit. Similarly, a second independent fluidic circuit, characterized as the engine loop, connects in series the top of thermal energy reservoir **230,** steam valve **238,** steam engine **240,** condensing radiator **261,** condensed water tank **244,** water pump **236,** water valve **239,** and returns back to the bottom of the thermal energy storage reservoir **230.**

Collector loop water valve **231** controls the flow of water from the thermal energy storage into the bottom of heating tube **226,** while water pump **235** controls the water pressure in the collector loop and automatic check valve **237** prevents excessive pressure from building up in the collector loop. Similarly, steam valve **238** controls the flow of superheated vapor to steam engine **240,** while engine loop water pump **236** determines the pressure within thermal storage reservoir **230.**

The transfer of heat to thermal storage reservoir 230 from the solar collector and the transfer of heat from the thermal storage reservoir to the steam engine **240** take place in two independent process flows. The collector flow operates in proportion to the solar heating supply, while the engine flow operates in proportion to the power demand. Regarding the collector flow, during periods when adequate sunlight is available, so that sufficient steam pressure is produced in collector tube **226** by the absorption of concentrated sunlight to force open automatic valve **237,** heat from the concentrated sunlight is transferred to the water in tube **226,** and then transferred to the top of thermal storage reservoir **230.** Conversely, at night, or during periods of obscured sun, valves **237** and **231** are closed. It is appreciated that throughout day and night, concentrator mirror **210** is continuously rotated on its axis so that whenever direct sunlight is available, the alignment of the collector is such that heating of the water in tube **226** will occur. And regarding the engine loop, during periods of demand for power, both valves **238** and **239** are opened and high pressure steam from the top of thermal energy storage reservoir **230** is admitted to steam engine **240,** and after expansion, is condensed in radiator **261** and drains as liquid water into water tank **244.** In winter, when temperatures are low enough to require space heating, the flow of cooling air past radiator **261** may provide a supplemental supply of warm air for space heating purposes. In contrast, during summer, when temperatures are high enough that further space heating is undesirable, radiator **261** simply rejects heat to the outdoors.

The heating process, in more detail is this: cold pressurized water is forced into the lower end of tube **226** by collector loop circulating pump **235** and heated along the axis of the collector. The upward tilt in the axis of tube **226** enables very high heating rates of the steam compared to horizontal tubes as is known in the art. Under normal operating conditions, as the water is heated by the concentrated sunlight, it reaches boiling temperature at a point indicated by level **232.** Between the onset of boiling at level **232** and the onset of superheating at level **234,** the steam transitions from very wet to very dry at substantially constant temperature. Above level **234,** the steam is superheated, and its temperature increases to the design maximum. Once raised in temperature to the design point, the superheated steam flows to thermal storage reservoir **230,** and/or to steam engine **240.**

In a "cold start" case, corresponding to the lowest quantity of heat in storage, pressure vessel **241** is almost entirely filled with near room temperature water, with a relatively small vapor space at the top, and water tank **244** is almost empty. In this state, the top of the liquid level **232** is near the top of pressure vessel **241.** Very shortly after concentrated sunlight is focused onto tube **226,** superheated steam is forced into the top of pressure vessel **241,** through automatic valve **237.** At the same time, cold water is pumped by pump **235** from the bottom of pressure **vessel 241** through valve **231.** As this steam is blown against rock pebbles **245** at the top of thermal energy storage reservoir **230,** the pebbles begin to heat up. A portion of the incoming steam initially condenses on pebbles **245** and drips down to the water level **232** and begins to heat the water in reservoir **230.** Because of the relatively low conductivity of gaseous steam, there is relatively little drop in the gaseous steam temperature, and valve **238** may be opened shortly after sunlight becomes available to provide superheated vapor to steam engine **240.** As superheated steam continues to flow into the top of reservoir **230,** while liquid water continues to be pumped out of the bottom, the liquid water temperature continues to increase until it reaches the boiling point. Also as superheated steam continues to flow past upper pebbles **245,** their temperature also soon exceeds the boiling point of the pressurized water in vessel **241.** As the water in the pressure vessel boils, as steam is provided to engine **240,** and as water is pumped out the bottom of reservoir 230, liquid level 232 drops, and a larger fraction of the rock pebbles 242 are exposed above water level 232, and they too begin to increase in temperature above the pressurized water boiling point. This process may be allowed to proceed until water level 232 has dropped to the lowest permitted safe level; at which point thermal energy storage reservoir 230 has reached its maximum capacity, and essentially all the pebbles 242 above the saturated water level 234 are at the superheated steam temperature, and most of the water in the system is contained in liquid water tank 244. At this point, further removal of liquid water by pump 235 from reservoir 230 must be made up by water pump 236 pumping condensed water from tank 244 through valve 239 back into the bottom of reservoir 230.

After sunset, or during extended periods without available concentrated sunlight, valves 237 and 231 are closed and the collector loop is no longer operative. In this case, as superheated steam is provided to steam engine 240 through valve 238, makeup water is pumped into the bottom of reservoir 230 by pump 236 through valve 239. As water level 232 rises in reservoir 230, so does the saturated vapor level 234, and heat is transferred from the newly immersed hot rock pebbles 234 to the surrounding water and more steam is generated. This process may continue until the saturated vapor level 234 in reservoir 230 reaches the level of the steam valve 283. At this point, it is typically undesirable to continue to operate the steam engine on the saturated water, but extraction of heat from thermal energy storage reservoir 230 by the heating of water from cold water supply 262 and delivery to residential hot water supply 260 is still desirable, especially in winter for space heating purposes. In the limit that practically all of the heat stored in reservoir 230 is extracted overnight, then the diurnal cycle is complete, and a "cold start" condition is again obtained. It is convenient with this system that the natural time of need for heat is at night, which corresponds to the period of relatively lower mean water temperature in reservoir 230, while the natural time of need for power is during the day, corresponding to the period of relatively higher steam temperature and more efficient electric power generation.

The approximate division of the incoming solar energy may be estimated, based on typical steam engine thermal efficiencies, to be ¼ to 1/3 to power and most of the balance to heating. With such a system, well over 90% of the incident solar energy may be exploited for the combination of heating and power. The division between heat and power with such a system is thus quite well matched to the typical heat vs. power consumption for a typical residential consumer in the South Western United States, and especially so in winter.

After sundown, on cold winter nights when there is a possibility of water in collector tube 226 freezing, it is advantageous to allow dry steam from thermal storage reservoir 230 to flow backwards through the collector tube and flush any liquid water out of tube 226.

While particular operational sequences, materials, temperatures, parameters, and particular embodiments have been described and or illustrated, such are not intended to be limiting. Modifications and changes may become apparent to those skilled in the art, and it is intended that the invention be limited only by the scope of the appended claims.

### CONCEPTS

As short summaries, this writing has disclosed at least the following broad concepts.

The invention is however only defined by the claims.
Concept 1. A solar thermal power plant comprising:
   a parabolic trough mirror having a longitudinal focal axis for concentrating sunlight therealong;
   means for rotating said mirror about a longitudinal rotation axis to follow the sun; and
   a heat collector comprising an elongated heating tube surrounding a flow channel, said flow channel having an oblong cross-sectional shape characterized by major and minor axes with a largest diameter of the channel along the major axis and a smallest diameter of the channel along the minor axis and with the major axis aligned with a longitudinal plane of symmetry of the parabolic trough mirror, said heating tube coaxially positioned along the focal axis of said mirror to receive concentrated sunlight therefrom so that a working fluid in said heating tube is heated thereby and provided for use through an outlet end of said heating tube.
Concept 2. The solar thermal power plant of concept 1,
   wherein the focal ratio of said mirror is about f/0.25.
Concept 3. The solar thermal power plant of concept I,
   wherein said mirror rotating means includes a timer for rotating the parabolic trough mirror to track the sun based on a predetermined rotation schedule.
Concept 4. The solar thermal power plant of concept 1,
   wherein the ratio of the largest diameter to the smallest diameter is about 2:1.
Concept 5. The solar thermal power plant of concept 1,
   wherein the oblong cross-sectional shape of the flow channel is formed by two parabolic surfaces joined along the major axis to form two opposing vertices.
Concept 6. The solar thermal power plant of concept 5,
   wherein each of the opposing vertices forms an angle of about 90 degrees.
Concept 7. the solar thermal power plant of concept 1,
   wherein the oblong cross-sectional shape of the flow channel has four sides with two opposing vertices along the major axis and two opposing vertices along the minor axis.
Concept 8. The solar thermal power plant of concept 1,
   wherein said heating tube is a sunlight-absorbing thin-walled tube.
Concept 9. The solar thermal power plant of concept 8,
   wherein said heat collector further comprises an evacuated optically transparent thin-walled tube telescopically surrounding and radially spaced from the heating tube.
Concept 10. The solar thermal power plant of concept 1,
   wherein said heating tube comprises an optically transparent thick-walled tube having an inner wall surface forming the flow channel and a convex curvilinear outer wall surface for magnifying the dimensions of the flow channel, said inner wall surface coated with a sunlight absorbing material.
Concept 11. The solar thermal power plant of concept 10,
   wherein the ratio of the outer wall surface diameter of the optically transparent thick envelope to the largest diameter of the flow channel along the major axis is at least 3:1.
Concept 12. The solar thermal power plant of concept 10,
   wherein said heat collector further comprises an evacuated optically transparent thin tube telescopically surrounding and radially spaced from the optically transparent thick-walled heating tube.
Concept 13. The solar thermal power plant of concept 1,
   wherein said heating tube is longer than said mirror and positioned to extend beyond each end of said mirror.
Concept 14. The solar thermal power plant of concept 13,
   wherein said heat collector is positioned to extend beyond each end of said mirror by up to an amount substantially equal to the focal length of said mirror times tan(23.5 degrees).
Concept 15. The solar thermal power plant of concept I,
   wherein the ratio of a largest outer diameter of the heating tube to the width of said mirror is about 0.45%.
Concept 16. The solar thermal power plant of concept 1,
   further comprising means for mounting said mirror so that the focal axis is parallel with the earth's rotational axis and said mirror is rotatable about a longitudinal rotation axis thereof.
Concept 17. The solar thermal power plant of concept 16,
   wherein the mirror mounting means is capable of mounting said mirror so that the focal axis thereof is also the rotation axis.
Concept 18. The solar thermal power plant of concept 16,
   wherein said mirror mounting means includes means for substantially aligning the focal axis with the North Star for use in northern hemisphere locations.
Concept 19. The solar thermal power plant of concept 16,
   wherein said mirror mounting means includes means for angling the focal axis of said mirror from horizontal by an angle equal to the latitude of the mounting location.
Concept 20. The solar thermal power plant of concept 16,
   wherein for non-zero latitude mounting locations the mirror mounting means is capable of mounting said mirror so that the outlet end of the heating tube is elevated higher than the opposite end.
Concept 21. The solar thermal power plant of concept 1,
   further comprising a thermal storage reservoir operably connected to the outlet end of the heating tube to storably receive thermal energy transferred to the reservoir by the heated working fluid.
Concept 22. The solar thermal power plant of concept 21,
   wherein said thermal storage reservoir is also operably connected to an inlet end of the heating tube to return the working fluid thereto in a closed-loop thermal storage cycle.
Concept 23. The solar thermal power plant of concept 21,
   wherein said thermal storage reservoir is fluidically connected to the outlet end of the heating tube to storably receive the heated working fluid therefrom.
Concept 24. The solar thermal power plant of concept 23,
   wherein said thermal storage reservoir is also fluidically connected to an inlet end of the heating tube to return the working fluid thereto in a closed-loop thermal storage cycle.
Concept 25. The solar thermal power plant of concept 21,
   wherein said thermal storage reservoir contains water and rock for use as the thermal energy storage medium.
Concept 26. The solar thermal power plant of concept 21,
   wherein said thermal storage reservoir has a heat exchange surface connectable to a water supply line for heating water supplied thereby.
Concept 27. The solar thermal power plant of concept 1,
   further comprising a heat-powered engine operably connected to receive thermal energy from said heat collector for producing power.
Concept 28. The solar thermal power plant of concept 27,
   further comprising a thermal storage reservoir operatively connected to both the outlet end of the heating tube for storing thermal energy received therefrom, and said heat-powered engine for supplying thermal energy thereto.
Concept 29. The solar thermal power plant of concept 28,
   wherein said heat-powered engine is a steam engine fluidically connected to said thermal storage reservoir to receive steam stored therein.
Concept 30. The solar thermal power plant of concept 29,
   wherein the steam engine is fluidically connected to said thermal storage reservoir to also return water back into said reservoir in a closed-loop power cycle.
Concept 31. The solar thermal power plant of concept 30,
   wherein said thermal storage reservoir is also operably connected to an inlet end of the heating tube to return the working fluid thereto in a closed-loop thermal storage cycle which operates independently of the closed-loop power cycle.
Concept 32. The solar thermal power plant of concept 31,
   wherein water is also the working fluid for the closed-loop thermal storage cycle.
Concept 33. The solar thermal power plant of concept 32,
   wherein said thermal storage reservoir is fluidically connected to the outlet end of said heat collector to storably receive steam therefrom and to the input end of said heat collector to return water thereto, so that the same working fluid is used for both the closed-loop power cycle and the closed-loop thermal storage cycle.
Concept 34. The solar thermal power plant of concept 27,
   further comprising an electric generator operably connected to said heat-powered engine.
Concept 35. The solar thermal power plant of concept 1,
   wherein the outlet end of the heating tube is fluidically connectable to a water storage tank, and the heating tube has an inlet end fluidically connectable to a water source.
Concept 36. The solar thermal power plant of concept 3 5,
   further comprising a water pump for pumping water from the water source into the inlet end and heated water from the outlet end into the water storage tank.
Concept 37. A solar thermal power plant comprising:
   a parabolic trough mirror having a longitudinal focal axis for concentrating sunlight therealong;
   means for rotating said mirror about the rotation axis to follow the sun; and
   a tubular heat collector comprising an optically transparent thick-walled heating tube having an inner wall surface forming a flow channel and a convex curvilinear outer wall surface for magnifying the dimensions of the flow channel, said inner wall surface coated with a sunlight absorbing material, and said heating tube coaxially positioned along the focal axis to receive concentrated sunlight from said mirror so that a working fluid in the flow channel is heated thereby and provided for use through an outlet end of the heating tube.
Concept 38. The solar thermal power plant ot concept 37,
   wherein the ratio of the outer wall surface diameter to the inner wall surface diameter of the heating tube is at least 3:1.
Concept 39. The solar thermal power plant of concept 37,
   wherein the flow channel has an oblong cross-sectional shape characterized by major and minor axes with a largest diameter of the channel along the major axis and a smallest diameter of the channel along the minor axis and with the major axis aligned with a longitudinal plane of symmetry of the parabolic trough mirror.
Concept 40. The solar thermal power plant of concept 39,
   wherein the oblong cross-sectional shape of the heat pipe is formed by two parabolic segments joined along the major axis to form two opposing vertices.
Concept 41. The solar thermal power plant of concept 40,
   wherein each of the opposing vertices forms an angle of about 90 degrees.
Concept 42. The solar thermal power plant of concept 39,
   wherein the ratio of the largest diameter of the channel to the smallest diameter of the channel is about 2:1.
Concept 43. The solar thermal power plant of concept 37,
   wherein said heat collector further comprises an evacuated optically transparent thin tube telescopically surrounding and radially spaced from the heating tube.
Concept 44. The solar thermal power plant of concept 37,
   wherein the ratio of a largest outer diameter of the heating tube to the width of said mirror is about 0.45%.
Concept 45. A solar thermal power plant comprising:
   a parabolic trough mirror having a longitudinal focal axis for concentrating sunlight therealong;
   means for mounting said mirror so that the focal axis is parallel with the earth's rotational axis and said mirror is rotatable about a longitudinal rotation axis thereof;
   means for rotating said mirror about the rotation axis to follow the sun; and
   an elongated tubular heat collector forming a flow channel and coaxially positioned along the focal axis to receive concentrated sunlight from said mirror so that a working fluid in the flow channel is heated thereby and provided for use through an outlet end of said heat collector.
Concept 46. The solar thermal power plant of concept 45,
   wherein the mirror mounting means is capable of mounting said mirror so that the focal axis thereof is also the rotation axis.
Concept 47. The solar thermal power plant of concept 45,
   wherein said mirror mounting means includes means for substantially aligning the focal axis with the North Star for use in northern hemisphere locations.
Concept 48. The solar thermal power plant of concept 45,
   wherein said mirror mounting means includes means for angling the focal axis of said mirror from horizontal by an angle equal to the latitude of the mounting location.
Concept 49. The solar thermal power plant of concept 45,
   wherein for non-zero latitude mounting locations the mirror mounting means is capable of mounting said mirror so that the outlet end of the heat collector is elevated higher than the opposite end.
Concept 50. The solar thermal power plant of concept 45,
   wherein the ratio of a largest outer diameter of the heating tube to the width of said mirror is about 0.45%.
Concept 51. A solar thermal power plant comprising:
   a parabolic trough mirror having a longitudinal focal axis for concentrating sunlight therealong;
   means for mounting said mirror so that the focal axis is parallel with the earth's rotational axis and said mirror is rotatable about a longitudinal rotation axis thereof;
   means for rotating said mirror about a longitudinal rotation axis to follow the sun; and
   a tubular heat collector comprising an optically transparent thick-walted heating tube having an inner wall surface forming a flow channel and a convex curvilinear outer wall surface for magnifying the dimensions of the flow channel, said flow channel having an oblong cross-sectional shape characterized by major and minor axes with a largest diameter of the channel along the major axis and a smallest diameter of the channel along the minor axis and with the major axis aligned with a longitudinal plane of symmetry of the parabolic trough mirror, said inner wall surface coated with a sunlight absorbing material, and said heating tube coaxially positioned along the focal axis to receive concentrated sunlight from said mirror so that a working fluid in the flow channel is heated thereby and provided for use through an outlet end of the heating tube.

## Claims

1. A solar thermal power plant comprising:
a parabolic trough mirror (210) having a longitudinal focal axis for concentrating sunlight therealong;
means (215) for mounting said mirror so that the focal axis is parallel with the earth's rotational axis and said mirror is rotatable about a longitudinal rotation axis thereof;
means (215) for rotating said mirror about a longitudinal rotation axis to follow the sun; and
a tubular heat collector (220B) comprising a heating tube (223) coaxially positioned along the focal axis to receive concentrated sunlight from said mirror (210) so that a working fluid in a flow channel is heated thereby and provided for use through an outlet end of the heating tube (223), **characterized in that** the heating tube (223) is an optically transparent thick-walled heating tube (223) having an inner wall surface forming a flow channel and a convex curvilinear outer wall surface for magnifying the dimensions of the flow channel, said flow channel having an oblong cross-sectional shape **characterized by** major and minor axes with a largest diameter of the channel along the major axis and a smallest diameter of the channel along the minor axis and with the major axis aligned with a longitudinal plane of symmetry (213) of the parabolic trough mirror (210), said inner wall surface coated (227) with a sunlight absorbing material.

2. The solar thermal power plant of claim 1, wherein the ratio of the largest diameter to the smallest diameter is about 2:1.

3. The solar thermal power plant of claim 1, wherein the oblong cross-sectional shape of the flow channel is formed by two parabolic surfaces joined along the major axis to form two opposing vertices.

4. The solar thermal power plant of claim 3, wherein each of the opposing vertices forms an angle of about 90 degrees.

5. The solar thermal power plant of claim 1, wherein the oblong cross-sectional shape of the flow channel has four sides with two opposing vertices along the major axis and two opposing vertices along the minor axis.

6. The solar thermal power plant of claim 1, wherein the mirror mounting means (215) is capable of mounting said mirror (210) so that the focal axis thereof is also the rotation axis.

7. The solar thermal power plant of claim 1, further comprising a thermal storage reservoir (230) operably connected to the outlet end of the heating tube (220B) to storably receive thermal energy transferred to the reservoir (230) by the heated working fluid.

8. The solar thermal power plant of claim 7, wherein said thermal storage reservoir (230) is also operably connected to an inlet end of the heating tube (220B) to return the working fluid thereto in a closed-loop thermal storage cycle.

9. The solar thermal power plant of claim 7, wherein said thermal storage reservoir (230) is fluidically connected to the outlet end of the heating tube (220B) to storably receive the heated working fluid therefrom.

10. The solar thermal power plant of claim 9, wherein said thermal storage reservoir (230) is also fluidically connected to an inlet end of the heating tube (220B) to return the working fluid thereto in a closed-loop thermal storage cycle.

11. The solar thermal power plant of claim 7, wherein said thermal storage reservoir (230) contains water and rock for use as the thermal energy storage medium.

12. The solar thermal power plant of claim 1, wherein the outlet end of the heating tube (220B) is fluidically connectable to a water storage tank (260), and the heating tube (220B) has an inlet end fluidically connectable to a water source.

13. The solar thermal power plant of claim 12, further comprising a water pump (235, 236) for pumping water from the water source into the inlet end and heated water from the outlet end into the water storage tank.

## Patentansprüche

1. Sonnenenergiekraftwerk, das folgendes umfasst:
einen Parabolrinnenspiegel (210) mit einer longitudinalen Brennachse zur Konzentration von Sonnenlicht entlang dieser;
eine Einrichtung (215) zur Anbringung des genannten Spiegels, so dass die Brennachse parallel zu der Erdumdrehungsachse ist, und wobei der genannte Spiegel um eine Längsrotationsachse des Spiegels drehbar ist;
eine Einrichtung (215) zum Drehen des genannten Spiegels um eine Längsrotationsachse, so dass der Spiegel der Sonne folgt; und
einen röhrenförmigen Wärmekollektor (220B), der eine Heizröhre (223) umfasst, die koaxial entlang der Brennachse positioniert ist, so dass ein Nutzfluid in einem Durchflusskanal dadurch erhitzt wird, und vorgesehen für einen Einsatz durch ein Auslassende der Heizröhre (223), **dadurch gekennzeichnet, dass** es sich bei der Heizröhre (223) um eine optisch transparente, dickwandige Heizröhre (223) handelt, mit einer Innenwandoberfläche, die einen Durchflusskanal bildet, und mit einer konvexen, krummlinigen Außenwandoberfläche zur Vergrößerung der Dimensionen des Durchflusskanals, wobei der genannte Durchflusskanal eine längliche Querschnittsform aufweist, **gekennzeichnet durch** Haupt- und Nebenachsen mit einem größten Durchmesser des Kanals entlang der Hauptachse und mit einem kleinsten Durchmesser des Kanals entlang der Nebenachse, und wobei die Hauptachse mit einer longitudinalen Symmetrieebene (213) des Parabolrinnenspiegels (210) ausgerichtet ist, wobei die genannte Innenwandoberfläche (227) mit einem Sonnenlicht absorbierenden Material überzogen ist.

2. Sonnenenergiekraftwerk nach Anspruch 1, wobei das Verhältnis des größten Durchmessers zu dem kleinsten Durchmesser etwa 2:1 beträgt.

3. Sonnenenergiekraftwerk nach Anspruch 1, wobei die längliche Querschnittsform des Durchflusskanals durch zwei parabolische Oberflächen gebildet wird, die entlang der Hauptachse verbunden sind, so dass zwei entgegengesetzte Scheitelpunkte gebildet werden.

4. Sonnenenergiekraftwerk nach Anspruch 3, wobei jeder der entgegengesetzten Scheitelpunkte einen Winkel von etwa 90 Grad bildet.

5. Sonnenenergiekraftwerk nach Anspruch 1, wobei die längliche Querschnittsform des Durchflusskanals vier Seiten mit zwei entgegengesetzten Scheitelpunkten entlang der Hauptachse und zwei entgegengesetzten Scheitelpunkten entlang der Nebenachse aufweist.

6. Sonnenenergiekraftwerk nach Anspruch 1, wobei die Einrichtung (215) zur Anbringung des Spiegels den genannten Spiegel (210) so anbringen kann, dass dessen Brennachse gleichzeitig die Rotationsachse ist.

7. Sonnenenergiekraftwerk nach Anspruch 1, wobei dieses ferner einen Wärmespeicherbehälter (230) umfasst, der funktionsfähig mit dem Auslassende der Heizröhre (220B) verbunden ist, um speichernd Wärmeenergie zu empfangen, die durch das erhitzte Nutzfluid zu dem Behälter (230) übertragen wird.

8. Sonnenenergiekraftwerk nach Anspruch 7, wobei der genannte Wärmespeicherbehälter (230) ferner funktionsfähig mit einem Einlassende der Heizröhre (220B) verbunden ist, um das Nutzfluid in einem geschlossenen Wärmespeicherkreislauf zu dieser zurückzuführen.

9. Sonnenenergiekraftwerk nach Anspruch7, wobei der genannte Wärmespeicherbehälter (230) eine Fluidverbindung mit dem Auslassende der Heizröhre (220B) aufweist, um das erhitzte Nutzfluid speichernd davon aufzunehmen.

10. Sonnenenergiekraftwerk nach Anspruch 9, wobei der genannte Wärmespeicherbehälter (230) ferner eine Fluidverbindung mit einem Einlassende der Heizröhre (220B) aufweist, um das Nutzfluid in einem geschlossenen Wärmespeicherkreislauf zu dieser zurückzuführen.

11. Sonnenenergiekraftwerk nach Anspruch 7, wobei der genannte Wärmespeicherbehälter (230) Wasser und Stein zur Verwendung als Wärmeenergiespeichermedium enthält.

12. Sonnenenergiekraftwerk nach Anspruch 1, wobei das Auslassende der Heizröhre (220B) eine Fluidverbindung mit einem Wasserspeicherbehälter (260) aufweist, und wobei die Heizröhre (220B) ein Einlassende aufweist, das mit einer Wasserquelle in fluidübertragungsfähig verbunden werden kann.

13. Sonnenenergiekraftwerk nach Anspruch 12, wobei dieses ferner eine Wasserpumpe (235, 236) zum Pumpen von Wasser von der Wasserquelle in das Einlassende und von erhitztem Wasser von dem Auslassende in den Wasserspeicherbehälter umfasst.

## Revendications

1. Centrale solaire thermodynamique comprenant :
un miroir cylindro-parabolique (210) ayant un axe focal longitudinal pour concentrer la lumière du soleil le long de celui-ci ;
des moyens (215) pour monter ledit miroir de sorte que l'axe focal est parallèle à l'axe de rotation de la Terre et ledit miroir peut tourner autour d'un axe de rotation longitudinal de ceux-ci ;
des moyens (215) pour faire tourner ledit miroir autour d'un axe de rotation longitudinal pour suivre le soleil ; et
un collecteur de chaleur tubulaire (220B) comprenant un tube de chauffage (223) positionné de manière coaxiale le long de l'axe focal pour recevoir la lumière du soleil concentrée à partir dudit miroir (210) de sorte qu'un fluide de travail dans un canal d'écoulement est ainsi chauffé et fourni pour être utilisé à travers une extrémité de sortie du tube de chauffage (223), **caractérisé en ce que** le tube de chauffage (223) est un tube de chauffage optiquement transparent à paroi épaisse (223) ayant une surface de paroi interne formant un canal d'écoulement et une surface de paroi externe convexe curviligne pour grossir les dimensions du canal d'écoulement, ledit canal d'écoulement ayant une forme en section transversale oblongue **caractérisée par** des axes majeur et mineur avec un plus grand diamètre du canal le long de l'axe majeur et un petit diamètre du canal le long de l'axe mineur et avec l'axe majeur aligné sur un plan de symétrie longitudinal (213) du miroir cylindro-parabolique (210), ladite surface de paroi interne (227) étant recouverte d'un matériau absorbant la lumière du soleil.

2. Centrale solaire thermodynamique selon la revendication 1, dans laquelle le rapport du plus grand diamètre au plus petit diamètre est d'environ 2:1.

3. Centrale solaire thermodynamique selon la revendication 1, dans laquelle la forme en section transversale oblongue du canal d'écoulement est formée par deux surfaces paraboliques reliées le long de l'axe majeur pour former deux sommets opposés.

4. Centrale solaire thermodynamique selon la revendication 3, dans laquelle chacun des sommets opposés forme un angle d'environ 90 degrés.

5. Centrale solaire thermodynamique selon la revendication 1, dans laquelle la forme en section transversale oblongue du canal d'écoulement a quatre côtés avec deux sommets opposés le long de l'axe majeur et deux sommets opposés le long de l'axe mineur.

6. Centrale solaire thermodynamique selon la revendication 1, dans laquelle les moyens de montage de miroir (215) peuvent monter ledit miroir (210) de sorte que l'axe focal de celui-ci est également l'axe de rotation.

7. Centrale solaire thermodynamique selon la revendication 1, comprenant en outre un réservoir de stockage thermique (230) raccordé de manière fonctionnelle à l'extrémité de sortie du tube de chauffage (220B) pour recevoir à des fins de stockage l'énergie thermique transférée au réservoir (230) par le fluide de travail chauffé.

8. Centrale solaire thermodynamique selon la revendication 7, dans laquelle ledit réservoir de stockage thermique (230) est également raccordé de manière fonctionnelle à une extrémité d'entrée du tube de chauffage (220B) pour y rapporter le fluide de travail dans un cycle de stockage thermique en boucle fermée.

9. Centrale solaire thermodynamique selon la revendication 7, dans laquelle ledit réservoir de stockage thermique (230) est raccordé de manière fluidique à l'extrémité de sortie du tube de chauffage (220B) pour en recevoir à des fins de stockage le fluide de travail.

10. Centrale solaire thermodynamique selon la revendication 9, dans laquelle ledit réservoir de stockage thermique (230) est également raccordé de manière fluidique à une extrémité d'entrée du tube de chauffage (220B) pour y rapporter le fluide de travail dans un cycle de stockage thermique en boucle fermée.

11. Centrale solaire thermodynamique selon la revendication 7, dans laquelle ledit réservoir de stockage thermique (230) contient de l'eau et des pierres à utiliser comme milieu de stockage de l'énergie thermique.

12. Centrale solaire thermodynamique selon la revendication 1, dans laquelle l'extrémité de sortie du tube de chauffage (220B) peut être raccordée de manière fluidique à un réservoir de stockage d'eau (260), et le tube de chauffage (220B) a une extrémité d'entrée pouvant être raccordée de manière fluidique à une source d'eau.

13. Centrale solaire thermodynamique selon la revendication 12, comprenant en outre une pompe à eau (235, 236) pour pomper l'eau de la source d'eau dans l'extrémité d'entrée et l'eau chauffée à partir de l'extrémité de sortie dans le réservoir de stockage d'eau.
